# EUROPEAN PATENT APPLICATION

(11) **EP 4 761 431 A1**
(43) Date of publication of application: **17.06.2026**
(21) Application number: 24853591.6
(22) Date of filing: 04.08.2024
(51) Int. Cl.: H04W 72/231

(54) **METHOD AND DEVICE FOR COMMUNICATION NODE USED FOR WIRELESS COMMUNICATION**

(30) Priority: 11.08.2023 CN 202311015992
(71) Applicant: Apogee 5G Global, LLC, Plano, TX 75024 (US)
(72) Inventor: YU, Qiaoling, Shanghai 201206 (CN); XIA, Shushu, Shanghai 201206 (CN); ZHANG, Xiaobo, Shanghai 201206 (CN)
(74) Representative: Gunzelmann, Rainer
(86) International application number: PCT/CN2024/109677
(87) International publication number: WO 2025/036179

(57) **Abstract**

The present application discloses a method and device for a communication node used for wireless communication. The method comprises: a communication node receives a first message, the first message comprising configuration information of each cell among at least one cell; determining a first cell, the first cell being one cell among the at least one cell; and applying the configuration information of the first cell, wherein the determination of the first cell depends on at least a third cell identifier, the third cell identifier is different from the identifier of the first cell, the configuration information of a second cell comprises the third cell identifier, before the configuration information of the first cell is applied, the configuration information of the second cell is applied, and spatial filtering of at least one RS resource associated with the third cell identifier is applied to wireless transmission. The solution provided by the present application is beneficial to enhancing the mobility of handover between different cells, avoiding the mobility delay and frequent handover.

## Description

### Technical Field

The present application relates to a transmission method and device in a wireless communication system, and in particular to a configuration method and device for mobility.

### Background Art

With the continuous development of wireless communication, the requirements for mobility, transmission delay, and system capacity are becoming increasingly high. In addition to improvements in existing current L3 (Layer 3) triggered mobility, the 3GPP (the 3rd Generation Partnership Project) RAN (Radio Access Network) #94e meeting decided to study L1 (Layer 1)/L2 (Layer 2) triggered mobility (LTM) in the "Further NR (New Radio) mobility enhancements" work item (WI).

In NR R (release) 18, CSI (Channel State Information) compression based on AI (Artificial Intelligence) or ML (Machine Learning) has been established as a work item. Considering the advantages of AI or ML, applying AI or ML to mobility has become an important evolution direction for 3GPP in R19.

### Summary of the Invention

In traditional solutions, UE (User Equipment) switching from a configuration of one cell to a configuration of another cell is based on measurement for an RS (Reference Signal) resource of a source cell and a target cell or measurement for an RS resource of the source cell; and the applicant has found through research that existing solutions have problems of mobility delay or frequent handover.

In view of the above problems, the present application provides a solution. In the description of the above problems, an NR system is used as one example. The present application is also applicable to scenarios such as an LTE (Long-Term Evolution) system or an LTE-A (Long-Term Evolution Advanced) system to achieve technical effects similar to those of the NR system; and further, although the present application provides specific implementations for mobility in an RRC_CONNECTED state involved in the handover, the present application can also be used in scenarios such as an RRC_IDLE state or an RRC_INACTIVE state, achieving technical effects similar to mobility in an RRC connected state. Further, the use of a unified design solution for different scenarios also helps to reduce hardware complexity and cost. Further, although the original intention of the present application is for a Uu air interface, the present application can also be used for a PC5 interface to achieve technical effects similar to those of the Uu air interface. Further, although the original intention of the present application is for a terminal and base station scenario, the present application is also applicable to a V2X (Vehicle-to-Everything) scenario, and communication scenarios between the terminal and a relay and between the relay and a base station to achieve technical effects similar to those in the terminal and base station scenario. Further, although the original intention of the present application is for a terminal and base station scenario, the present application is also applicable to a communication scenario of an IAB (Integrated Access and Backhaul) to achieve technical effects similar to those in the terminal and base station scenario. Further, although the original intention of the present application is for a terrestrial network (TN) scenario, the present application is also applicable to a communication scenario of a non-terrestrial network (NTN) to achieve technical effects similar to those in the TN scenario. In addition, the use of a unified solution for different scenarios also helps to reduce hardware complexity and costs.

As one embodiment, interpretations of terminologies in the present application refer to definitions in the specification protocol TS38 series of 3GPP.

As one embodiment, the interpretations of the terminologies in the present application refer to the definitions in the specification protocol TS37 series of 3GPP.

It should be noted that, in the absence of conflicts, embodiments and features in the embodiments in any node in the present application may be applied to any other node. In the absence of conflicts, the embodiments and the features in the embodiments of the present application may be arbitrarily combined with each other.

The present application discloses a method for a first node used for wireless communication, characterized by comprising:
receiving a first message, the first message comprising configuration information for each cell among at least one cell;
determining a first cell, the first cell being one cell among the at least one cell; and applying configuration information of the first cell,
wherein determination of the first cell depends on at least a third cell identifier; the third cell identifier is different from an identifier of the first cell; configuration information of a second cell comprises the third cell identifier; and before the configuration information of the first cell is applied, the configuration information of the second cell is applied, and a spatial filter of at least one RS resource associated with the third cell identifier is applied to wireless transmission.

As one embodiment, problems to be solved by the present application comprise: how to enhance mobility of UE handover between different cells.

As one embodiment, problems to be solved by the present application comprise: how to avoid mobility delay.

As one embodiment, problems to be solved by the present application comprise: how to avoid frequent handover.

As one embodiment, characteristics of the above method comprise: the first message comprises the configuration information for each cell among the at least one cell.

As one embodiment, the characteristics of the above method comprise: the first cell applies the configuration information of the first cell.

As one embodiment, the characteristics of the above method comprise: the determination of the first cell depends on at least the third cell identifier.

As one embodiment, the characteristics of the above method comprise: the configuration information of the second cell comprises the third cell identifier.

As one embodiment, the characteristics of the above method comprise: before the configuration information of the first cell is applied, the configuration information of the second cell is applied, and the spatial filter of the at least one RS resource associated with the third cell identifier is applied to the wireless transmission.

As one embodiment, the above method considers an impact of the third cell identifier on the determination of the first cell.

As one embodiment, the above method is beneficial for selecting a more appropriate cell.

As one embodiment, the above method is beneficial for reducing the number of handover between cells.

As one embodiment, the above method is beneficial for shortening handover delay of mobility between cells.

As one embodiment, the above method avoids data interruption.

As one embodiment, the above method is beneficial for implementing beam management based on AI or ML.

As one embodiment, the above method is beneficial for implementing mobility based on AI or ML.

According to one aspect of the present application, it is characterized by comprising:
receiving a third threshold,
wherein the phrase "determination of the first cell depends on a third cell identifier" means that: the determination of the first cell depends on a measurement result for an RS resource associated with the third cell identifier being not better than or worse than the third threshold.

As one embodiment, the characteristics of the above method comprise: the determination of the first cell depends on the measurement result for the RS resource associated with the third cell identifier and the third threshold, and is independent of a measurement result for the first cell.

As one embodiment, the above method considers an impact of the third threshold on the determination of the first cell.

As one embodiment, the above method reduces unnecessary measurement through the third threshold.

As one embodiment, the above method avoids data interruption.

As one embodiment, the above method is beneficial for selecting a more appropriate cell.

As one embodiment, the above method shortens delay.

As one embodiment, the above method enhances flexibility of handover between cells.

According to one aspect of the present application, it is characterized by comprising:
receiving a first threshold, the first threshold being for the first cell,
wherein the first threshold and the third threshold are configured for a same triggering event; and whether the first threshold is valid depends on whether a spatial filter of an RS resource associated with the third cell identifier is applied to the wireless transmission.

As one embodiment, the above method considers an impact of the first threshold on the determination of the first cell.

As one embodiment, the above method is beneficial for improving reliability of handover between cells.

As one embodiment, the above method avoids handover that is too early or too late.

As one embodiment, the above method avoids selecting an inappropriate or incorrect cell.

According to one aspect of the present application, it is characterized in that the phrase "determination of the first cell depends on a third cell identifier" means that: the determination of the first cell depends on the measurement result for the first cell being better than or not worse than the measurement result for the RS resource associated with the third cell identifier.

As one embodiment, the characteristics of the above method comprise: the determination of the first cell depends on the measurement result for the first cell and the measurement result for the RS resource associated with the third cell identifier.

As one embodiment, the above method considers impacts of measurement results of a plurality of cells on the determination of the first cell.

As one embodiment, the above method is beneficial for improving reliability of handover between cells.

As one embodiment, the above method is beneficial for enhancing flexibility of handover between cells.

As one embodiment, the above method avoids handover that is too early or too late.

As one embodiment, the above method is beneficial for selecting a more appropriate cell.

As one embodiment, the above method avoids selecting an inappropriate or incorrect cell.

According to one aspect of the present application, it is characterized by comprising:
executing radio link monitoring on the second cell,
wherein the behavior of executing radio link monitoring on the second cell depends on whether the spatial filter of the RS resource associated with the third cell identifier is applied to the wireless transmission.

As one embodiment, the above method considers an impact of the spatial filter of the RS resource associated with the third cell identifier on executing radio link monitoring.

According to one aspect of the present application, it is characterized by comprising:
executing radio link monitoring on the second cell; and in response to monitoring a radio link problem on the second cell, determining a radio link failure,
wherein the behavior of determining the radio link failure depends on a spatial filter of an RS resource of the first cell being applied to the wireless transmission and a spatial filter of any RS resource associated with the third cell identifier not being applied to the wireless transmission.

As one embodiment, the above method considers impacts of the spatial filter of the RS resource of the first cell and the spatial filter of the RS resource associated with the third cell identifier on executing radio link monitoring.

As one embodiment, the above method is beneficial for improving reliability of radio link transmission.

As one embodiment, the above method is beneficial for improving stability of radio link transmission.

According to one aspect of the present application, it is characterized in that the configuration information of the second cell comprises a first list, the first list comprises at least one cell identifier, and the third cell identifier is one cell identifier among the at least one cell identifier; and the determination of the first cell depends on a position of the third cell identifier in the first list.

As one embodiment, the characteristics of the above method comprise: the determination of the first cell depends on the position of the third cell identifier in the first list.

As one embodiment, the above method considers an impact of the position of the third cell identifier in the first list on the determination of the first cell.

As one embodiment, the above method is beneficial for selecting a more appropriate cell filter.

As one embodiment, the above method is beneficial for shortening delay of the spatial filter of the RS resource applied to the wireless transmission.

According to one aspect of the present application, it is characterized by comprising:
sending a first signal on the first cell,
wherein the first signal indicates that the configuration information of the first cell is applied.

The present application discloses a method for a second node used for wireless communication, characterized by comprising:
sending a first message, the first message comprising configuration information for each cell among at least one cell,
wherein a recipient of the first message determines a first cell, and the first cell is one cell among the at least one cell; the recipient of the first message applies configuration information of the first cell; determination of the first cell depends on at least a third cell identifier; the third cell identifier is different from an identifier of the first cell; configuration information of a second cell comprises the third cell identifier; and before the configuration information of the first cell is applied, the configuration information of the second cell is applied, and a spatial filter of at least one RS resource associated with the third cell identifier is applied to wireless transmission.

According to one aspect of the present application, it is characterized by comprising:
sending a third threshold,
wherein the phrase "determination of the first cell depends on a third cell identifier" means that: the determination of the first cell depends on a measurement result for an RS resource associated with the third cell identifier being not better than or worse than the third threshold.

According to one aspect of the present application, it is characterized by comprising:
sending a first threshold, the first threshold being for the first cell,
wherein the first threshold and the third threshold are configured for a same triggering event; and whether the first threshold is valid depends on whether a spatial filter of the RS resource associated with the third cell identifier is applied to the wireless transmission.

According to one aspect of the present application, it is characterized in that the phrase "determination of the first cell depends on a third cell identifier" means that: the determination of the first cell depends on a measurement result for the first cell being better than or not worse than the measurement result for the RS resource associated with the third cell identifier.

According to one aspect of the present application, it is characterized in that the recipient of the first message executes radio link monitoring on the second cell; and the behavior of executing radio link monitoring on the second cell depends on whether the spatial filter of the RS resource associated with the third cell identifier is applied to the wireless transmission.

According to one aspect of the present application, it is characterized in that the recipient of the first message executes radio link monitoring on the second cell; in response to monitoring a radio link problem on the second cell, the recipient of the first message determines a radio link failure; and the behavior of determining the radio link failure depends on a spatial filter of an RS resource of the first cell being applied to the wireless transmission and a spatial filter of any RS resource associated with the third cell identifier not being applied to the wireless transmission.

According to one aspect of the present application, it is characterized in that the configuration information of the second cell comprises a first list, the first list comprises at least one cell identifier, and the third cell identifier is one cell identifier among the at least one cell identifier; and the determination of the first cell depends on a position of the third cell identifier in the first list.

According to one aspect of the present application, it is characterized in that the recipient of the first message sends a first signal on the first cell; and the first signal indicates that the configuration information of the first cell is applied.

The present application discloses a method for a third node used for wireless communication, characterized by comprising:
receiving a first signal on a first cell,
wherein a sender of the first signal receives a first message, and the first message comprises configuration information for each cell among at least one cell; the sender of the first signal determines the first cell, and the first cell is one cell among the at least one cell; the sender of the first signal applies configuration information of the first cell; determination of the first cell depends on at least a third cell identifier; the third cell identifier is different from an identifier of the first cell; configuration information of a second cell comprises the third cell identifier; before the configuration information of the first cell is applied, the configuration information of the second cell is applied, and a spatial filter of at least one RS resource associated with the third cell identifier is applied to wireless transmission; and the first signal indicates that the configuration information of the first cell is applied.

According to one aspect of the present application, it is characterized in that the sender of the first signal receives a third threshold; and the phrase "determination of the first cell depends on a third cell identifier" means that: the determination of the first cell depends on a measurement result for the RS resource associated with the third cell identifier being not better than or worse than the third threshold.

According to one aspect of the present application, it is characterized in that the sender of the first signal receives a first threshold, and the first threshold is for the first cell; the first threshold and the third threshold are configured for a same triggering event; and whether the first threshold is valid depends on whether a spatial filter of an RS resource associated with the third cell identifier is applied to the wireless transmission.

According to one aspect of the present application, it is characterized in that the phrase "determination of the first cell depends on a third cell identifier" means that: the determination of the first cell depends on a measurement result for the first cell being better than or not worse than the measurement result for the RS resource associated with the third cell identifier.

According to one aspect of the present application, it is characterized in that the sender of the first signal receives executing radio link monitoring on the second cell; and the behavior of executing radio link monitoring on the second cell depends on whether the spatial filter of the RS resource associated with the third cell identifier is applied to the wireless transmission.

According to one aspect of the present application, it is characterized in that the sender of the first signal receives executing radio link monitoring on the second cell; in response to monitoring a radio link problem on the second cell, the sender of the first signal determines a radio link failure; and the behavior of determining the radio link failure depends on a spatial filter of an RS resource of the first cell being applied to the wireless transmission and a spatial filter of any RS resource associated with the third cell identifier not being applied to the wireless transmission.

According to one aspect of the present application, it is characterized in that the configuration information of the second cell comprises a first list, the first list comprises at least one cell identifier, and the third cell identifier is one cell identifier among the at least one cell identifier; and the determination of the first cell depends on a position of the third cell identifier in the first list.

The present application discloses a first node used for wireless communication, characterized by comprising:
a first receiver receiving a first message, the first message comprising configuration information for each cell among at least one cell;
a first processor determining a first cell, the first cell being one cell among the at least one cell; and applying configuration information of the first cell,
wherein determination of the first cell depends on at least a third cell identifier; the third cell identifier is different from an identifier of the first cell; configuration information of a second cell comprises the third cell identifier; and before the configuration information of the first cell is applied, the configuration information of the second cell is applied, and a spatial filter of at least one RS resource associated with the third cell identifier is applied to wireless transmission.

The present application discloses a second node used for wireless communication, characterized by comprising:
a second transmitter sending a first message, the first message comprising configuration information for each cell among at least one cell,
wherein a recipient of the first message determines a first cell, and the first cell is one cell among the at least one cell; the recipient of the first message applies configuration information of the first cell; determination of the first cell depends on at least a third cell identifier; the third cell identifier is different from an identifier of the first cell; configuration information of a second cell comprises the third cell identifier; and before the configuration information of the first cell is applied, the configuration information of the second cell is applied, and a spatial filter of at least one RS resource associated with the third cell identifier is applied to wireless transmission.

The present application discloses a third node used for wireless communication, characterized by comprising:
a third receiver receiving a first signal on a first cell,
wherein a sender of the first signal receives a first message, and the first message comprises configuration information for each cell among at least one cell; the sender of the first signal determines the first cell, and the first cell is one cell among the at least one cell; the sender of the first signal applies configuration information of the first cell; determination of the first cell depends on at least a third cell identifier; the third cell identifier is different from an identifier of the first cell; configuration information of a second cell comprises the third cell identifier; before the configuration information of the first cell is applied, the configuration information of the second cell is applied, and a spatial filter of at least one RS resource associated with the third cell identifier is applied to wireless transmission; and the first signal indicates that the configuration information of the first cell is applied.

As one embodiment, compared with traditional solutions, the present application has the following advantages:
- being beneficial for selecting a more appropriate cell;
- being beneficial for reducing the number of handover between cells;
- being beneficial for shortening delay of handover between cells;
- being beneficial for enhancing flexibility of handover between cells;
- being beneficial for improving reliability of handover between cells;
- avoiding data interruption;
- being beneficial for implementing beam management based on AI or ML; and
- being beneficial for implementing mobility based on AI or ML.

### Brief Description of the Drawings

Other features, purposes, and advantages of the present application will become more apparent by reading the detailed description of the non-limiting embodiments in the following drawings:
FIG. 1 shows a flowchart of communication of a first node according to one embodiment of the present application;
FIG. 2 shows a schematic diagram of a network architecture according to one embodiment of the present application;
FIG. 3 shows a schematic diagram of an embodiment of a wireless protocol architecture for a user plane and a control plane according to one embodiment of the present application;
FIG. 4 shows a schematic diagram of a first communication device and a second communication device according to one embodiment of the present application;
FIG. 5 shows a flowchart of wireless signal transmission according to one embodiment of the present application;
FIG. 6 shows a schematic diagram in which determination of a first cell depends on a measurement result for an RS resource associated with a third cell identifier being not better than or worse than a third threshold according to one embodiment of the present application;
FIG. 7 shows a schematic diagram in which determination of a first cell depends on a measurement result for the first cell being better than or not worse than a measurement result for an RS resource associated with a third cell identifier according to one embodiment of the present application;
FIG. 8 shows that determination of a first cell depends on a position of a third cell identifier in a first list according to one embodiment of the present application;
FIG. 9 shows a flowchart of executing radio link monitoring on a second cell according to one embodiment of the present application;
FIG. 10 shows a schematic diagram of an artificial intelligence processing system according to one embodiment of the present application;
FIG. 11 shows a structural block diagram of a processing device used in a first node according to one embodiment of the present application;
FIG. 12 shows a structural block diagram of a processing device used in a second node according to one embodiment of the present application;
FIG. 13 shows a structural block diagram of a processing device used in a third node according to one embodiment of the present application; and
FIG. 14 shows a schematic diagram of an artificial intelligence processing system according to another embodiment of one embodiment of the present application.

### Detailed Description of Embodiments

The technical solutions of the present application will be described in further detail below with reference to the drawings. It should be noted that in the absence of conflicts, embodiments and features in the embodiments in the present application can be arbitrarily combined with each other.

### Embodiment 1

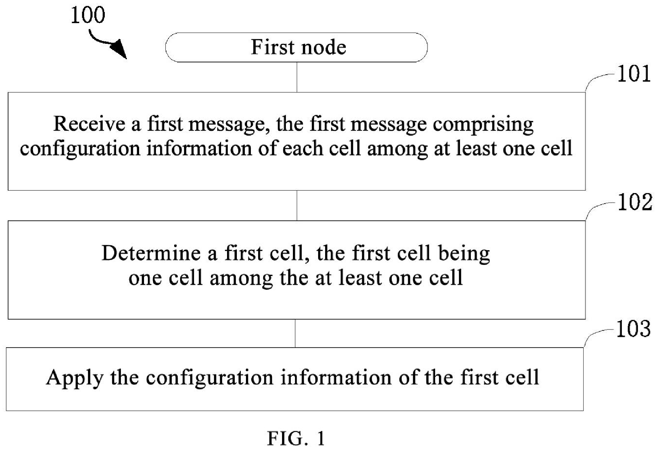

Embodiment 1 illustrates a flowchart of communication of a first node according to one embodiment of the present application, as shown in FIG. 1. In FIG. 1, each block represents one step. It particularly needs to be emphasized that an order of various blocks in the figure does not represent a temporal sequence between steps represented.

In Embodiment 1, in step 101, the first node in the present application receives a first message, and the first message comprises configuration information for each cell among at least one cell; in step 102, a first cell is determined, and the first cell is one cell among the at least one cell; and in step 103, configuration information of the first cell is applied, wherein determination of the first cell depends on at least a third cell identifier; the third cell identifier is different from an identifier of the first cell; configuration information of a second cell comprises the third cell identifier; and before the configuration information of the first cell is applied, the configuration information of the second cell is applied, and a spatial filter of at least one RS resource associated with the third cell identifier is applied to wireless transmission.

As one embodiment, the first message comprises at least one RRC (Radio Resource Control) message.

As one embodiment, the first message is one RRC message.

As one embodiment, the first message is transmitted through a PDSCH (Physical Downlink Shared Channel).

As one embodiment, the first message is transmitted through a DCCH (Dedicated Control Channel).

As one embodiment, the first message is an RRC message of one Cell Common.

As one embodiment, the first message comprises at least one DCI (Downlink Control Information) message.

As one embodiment, the first message is one DCI message.

The above method saves signaling overhead.

As one embodiment, the first message comprises at least one RRCReconfiguration message.

As one embodiment, the first message comprises at least one RRCResume message.

As one embodiment, the first message comprises at least one RRCReestablishment message.

As one embodiment, the first message is at least one RRCReconfiguration message.

As one embodiment, the first message is at least one RRCResume message.

As one embodiment, the first message is at least one RRCReestablishment message.

As one embodiment, the first message comprises a first-type information block for each cell in the at least one cell, and the first-type information block comprises the configuration information.

As one sub-embodiment of the above embodiment, only part of fields in the first-type information block comprise the configuration information.

As one sub-embodiment of the above embodiment, all fields in the first-type information block comprise the configuration information.

As one sub-embodiment of the above embodiment, the first-type information block is one ServingCellConfig IE.

As one sub-embodiment of the above embodiment, the first-type information block comprises one uplinkConfig field.

As one sub-embodiment of the above embodiment, the first-type information block comprises one PDCCH-ServingCellConfig IE.

As one sub-embodiment of the above embodiment, the first-type information block comprises one PDSCH-ServingCellConfig IE.

As one sub-embodiment of the above embodiment, the first-type information block comprises one CSI-MeasConfig IE.

As one embodiment, the first message indicates the configuration information.

As one embodiment, the first message comprises an index of an RS resource.

As one embodiment, the first message comprises an index of each RS resource in the at least one RS resource indicated by the first message.

As one embodiment, any cell in the at least one cell is one candidate cell.

As one embodiment, the candidate cell is a CHO (Conditional Handover) candidate cell.

As one embodiment, the candidate cell is an LTM candidate cell.

As one embodiment, the candidate cell is a candidate PCell (Primary Cell).

As one embodiment, the candidate cell is a candidate PSCell (Primary SCG (Secondary Cell Group) Cell, a primary cell of SCG).

As one embodiment, one serving cell is configured for the configuration information of any cell in the at least one cell.

As one embodiment, one PCell is configured for the configuration information of any cell in the at least one cell.

As one embodiment, one PSCell is configured for the configuration information of any cell in the at least one cell.

As one embodiment, the behavior of determining the first cell means: selecting the first cell.

As one embodiment, the behavior of determining the first cell means: confirming the first cell.

As one embodiment, the behavior of determining the first cell means: applying the first cell.

As one embodiment, the behavior of determining the first cell means: at least one of selecting the first cell, confirming the first cell, or applying the first cell.

As one embodiment, the behavior of determining the first cell means: using the first cell as a serving cell.

As one embodiment, the behavior of determining the first cell means: using the first cell as a target cell.

As one embodiment, the behavior of determining the first cell means: using the first cell as a target candidate cell.

As one embodiment, the behavior of determining the first cell means: connecting to the first cell.

As one embodiment, the behavior of determining the first cell means: switching to the first cell.

As one embodiment, the behavior of determining the first cell means: handing over to the first cell.

As one embodiment, when the first cell is determined, the spatial filter of the at least one RS resource associated with the third cell identifier is applied to the wireless transmission.

As one embodiment, when the first cell is determined, a spatial filter of any one RS resource associated with the third cell identifier is not applied to the wireless transmission.

As one embodiment, the first cell is determined through measurement.

As one embodiment, the first cell is determined through prediction.

As one embodiment, the first cell is determined through inference.

As one embodiment, the first cell is determined through model inference.

As one embodiment, in response to the behavior of determining the first cell, the configuration information of the first cell is applied.

As one embodiment, the behavior of determining the first cell triggers the behavior of applying the configuration information of the first cell.

As one embodiment, the behavior of applying the configuration information of the first cell comprises: applying configuration for the first cell in the first message.

As one embodiment, the behavior of applying the configuration information of the first cell comprises: executing signaling of the configuration information for the first cell in the first message.

As one embodiment, the behavior of applying the configuration information of the first cell comprises: a spatial filter of an RS resource associated with the first cell is applied to a radio link.

As one embodiment, the behavior of applying the configuration information of the first cell comprises: the spatial filter of the RS resource associated with the first cell is applied to the radio link, and a spatial filter of an RS resource associated with a third cell is applied to the radio link.

As one embodiment, the behavior of applying the configuration information of the first cell comprises: the spatial filter of the RS resource associated with the first cell is applied to the radio link, and a spatial filter of an RS resource associated with the second cell is applied to the radio link.

As one embodiment, the phrase "before the configuration information of the first cell is applied" means: at least one time interval immediately before the configuration information of the first cell begins to be applied.

As one embodiment, the phrase "before the configuration information of the first cell is applied" comprises: when the first cell is determined.

As one embodiment, the phrase "before the configuration information of the first cell is applied" comprises: when the first message is received.

As one embodiment, the phrase "before the configuration information of the first cell is applied" does not comprise: when the first message is received.

As one embodiment, when the first message is received, the second cell is a serving cell of the first node.

As one embodiment, when the first message is received, the second cell is a candidate serving cell of the first node.

As one embodiment, before the configuration information of the first cell is applied, a spatial filter of any RS resource of the first cell is not applied to the wireless transmission.

As one embodiment, the RS resource is an SSB.

As one embodiment, the SSB is an SS (Synchronization Signals)/PBCH.

As one embodiment, the SSB is a Synchronization Signals Block.

As one embodiment, the RS resource is a CSI (Channel State Information)-RS.

As one embodiment, the RS resource is TRS (CSI-RS for tracking).

As one embodiment, the RS resource is any one of the SSB or the CSI-RS.

As one embodiment, the RS resource is any one of the SSB or the CSI-RS or the TRS.

As one embodiment, an RS resource associated with the first cell is transmitted through a PDCCH.

As one embodiment, the RS resource associated with the first cell comprises at least one CSI-RS.

As one embodiment, the RS resource associated with the first cell comprises at least one SSB.

As one embodiment, the RS resource associated with the first cell indicates at least one CSI-RS index.

As one embodiment, the RS resource associated with the first cell indicates at least one SSB index.

As one embodiment, an RS resource associated with the third cell identifier is transmitted through a PDCCH.

As one embodiment, the RS resource associated with the third cell identifier comprises at least one CSI-RS.

As one embodiment, the RS resource associated with the third cell identifier comprises at least one SSB.

As one embodiment, the RS resource associated with the third cell identifier indicates at least one CSI-RS index.

As one embodiment, the RS resource associated with the third cell identifier indicates at least one SSB index.

As one embodiment, the determination of the first cell depends on an RS resource associated with the third cell identifier.

As one embodiment, the determination of the first cell depends on measurement for an RS resource associated with the third cell identifier.

As one sub-embodiment of the above embodiment, the phrase "measurement for an RS resource associated with the third cell identifier" means: evaluation for an RS resource associated with the third cell identifier.

As one sub-embodiment of the above embodiment, the phrase "measurement for an RS resource associated with the third cell identifier" means: prediction for the RS resource associated with the third cell identifier.

As one sub-embodiment of the above embodiment, the prediction depends on at least one of a movement direction, a movement speed, or signal quality measurement of the first node.

As one sub-embodiment of the above embodiment, the phrase "measurement for an RS resource associated with the third cell identifier" means: monitoring for the RS resource associated with the third cell identifier.

As one sub-embodiment of the above embodiment, the phrase "measurement for an RS resource associated with the third cell identifier" means: the signal quality measurement for the RS resource associated with the third cell identifier.

As one sub-embodiment of the above embodiment, the signal quality measurement is RRM (Radio Resource Management) measurement.

As one sub-embodiment of the above embodiment, the signal quality measurement is RSRQ (Reference Signal Received Quality) measurement.

As one sub-embodiment of the above embodiment, the signal quality measurement is RSRP (Reference Signal Received Power) measurement.

As one sub-embodiment of the above embodiment, the signal quality measurement is SINR (Signal to Interference plus Noise Ratio) measurement.

As one sub-embodiment of the above embodiment, the signal quality measurement comprises an L1 (Layer 1) filter.

As one sub-embodiment of the above embodiment, the signal quality measurement comprises an L3 (Layer 3) filter.

As one sub-embodiment of the above embodiment, the signal quality measurement is not subjected to the L1 filter or the L3 filter.

As one embodiment, the determination of the first cell depends on the spatial filter of the RS resource associated with the third cell identifier being applied to the wireless transmission.

As one sub-embodiment of the above embodiment, one piece of RRC signaling indicates that the spatial filter of the RS resource associated with the third cell identifier is applied to the wireless transmission/is not applied to the wireless transmission.

As one sub-embodiment of the above embodiment, one MAC CE indicates that the spatial filter of the RS resource associated with the third cell identifier is applied to the wireless transmission/is not applied to the wireless transmission.

As one sub-embodiment of the above embodiment, one MAC CE activates/deactivates the spatial filter of the RS resource associated with the third cell identifier being applied to the wireless transmission.

As one sub-embodiment of the above embodiment, one piece of DCI indicates that the spatial filter of the RS resource associated with the third cell identifier is applied to the wireless transmission/is not applied to the wireless transmission.

As one sub-embodiment of the above embodiment, one piece of DCI activates/deactivates the spatial filter of the RS resource associated with the third cell identifier being applied to the wireless transmission.

As one embodiment, the wireless transmission comprises sending by the first node, and the spatial filter comprises a Tx Spatial Filter (or a spatial domain transmit filter).

As one embodiment, applying the spatial filter of the RS resource associated with the third cell identifier to the wireless transmission comprises: the first node uses one Tx spatial filter that is the same as a reference receive spatial filter to send a wireless signal, and the reference receive spatial filter is used for receiving a reference signal on the RS resource associated with the third cell identifier.

As one sub-embodiment of the above embodiment, the above wireless signal comprises at least one of a PUSCH (Physical Uplink Shared Channel), a PUCCH (Physical Uplink Control Channel), and an SRS (Sounding Reference Signal).

As one embodiment, the wireless transmission comprises reception by the first node, and the spatial filter comprises an Rx Spatial Filter (or a spatial domain receive filter).

As one embodiment, applying a spatial filter of an RS resource indicated by a first parameter to the wireless transmission comprises: the first node uses one Rx spatial filter that is the same as the reference receive spatial filter to receive the wireless signal, and the reference receive spatial filter is used for receiving the reference signal on the RS resource indicated by the first parameter.

As one sub-embodiment of the above embodiment, the above wireless signal comprises at least one of a PDSCH (Physical Downlink Shared Channel), a PDCCH (Physical Downlink Control Channel), and a CSI-RS.

As one embodiment, the phrase "the RS resource associated with the third cell identifier" means that: the RS resource contains the third cell identifier.

As one embodiment, the phrase "the RS resource associated with the third cell identifier" means that: the RS resource contains an index of the third cell identifier.

As one embodiment, the phrase "the RS resource associated with the third cell identifier" means that: the RS resource is configured with the third cell identifier.

As one embodiment, the third cell identifier is not an identifier of any SCell.

As one embodiment, the third cell identifier is not the identifier of any SCell of a second node.

As one embodiment, the third cell identifier is not the identifier of any SCell of a third node.

As one embodiment, the third cell identifier is not the identifier of any SCell of the any cell.

As one embodiment, the third cell identifier is not an identifier of any cell in the at least one cell.

As one embodiment, the first cell is any cell in the at least one cell.

As one embodiment, the third cell identifier is an identity identifier.

As one embodiment, the third cell identifier is transmitted through a PDSCH.

As one embodiment, the third cell identifier is transmitted through an SSB.

As one embodiment, the third cell identifier is ServCellIndex.

As one embodiment, the third cell identifier is a Beam ID.

As one embodiment, the third cell identifier is a PCI (Physical Cell Identity).

As one embodiment, the third cell identifier is one PCI, and the identifier of the first cell is a PCI of the first cell.

As one embodiment, the third cell identifier is a PCI of the third cell, and the identifier of the first cell is the PCI of the first cell.

As one sub-embodiment of the above embodiment, the third cell and the second cell belong to the same CU.

As one sub-embodiment of the above embodiment, the third cell and the second cell belong to different CUs.

As one sub-embodiment of the above embodiment, the third cell and the second cell belong to the same DU.

As one sub-embodiment of the above embodiment, the third cell and the second cell belong to different DUs of different CUs.

As one sub-embodiment of the above embodiment, the third cell and the second cell belong to different DUs of the same CU.

As one sub-embodiment of the above embodiment, the third cell and the second cell belong to the same gNB.

As one sub-embodiment of the above embodiment, the third cell and the second cell belong to different gNBs.

As one sub-embodiment of the above embodiment, the third cell and the second cell belong to the same RAT.

As one sub-embodiment of the above embodiment, the third cell and the second cell belong to different RATs.

As one embodiment, the configuration information of the second cell comprises at least one RRC message.

As one embodiment, the configuration information of the second cell comprises at least one RRC field.

As one embodiment, the configuration information of the second cell comprises at least one RS resource set.

As one embodiment, the configuration information of the second cell comprises at least one piece of RS resource set measurement.

As one embodiment, the configuration information of the second cell comprises at least one RS resource set configuration.

As one embodiment, the configuration information of the second cell comprises at least one serving cell configuration.

As one embodiment, the configuration information of the second cell comprises at least one RLM IE.

As one embodiment, the configuration information of the second cell comprises at least the third cell identifier.

As one embodiment, the configuration information of the second cell indicates the third cell identifier.

As one embodiment, the configuration information of the second cell comprises one additionalPCI-r17 field, and the one additionalPCI-r17 field indicates the PCI of the third cell.

As one embodiment, the configuration information of the second cell comprises at least one additionalPCI-r17 field, and one additionalPCI-r17 field in the at least one additionalPCI-r17 field indicates the PCI of the third cell.

As one embodiment, one first-type information block comprises configuration information for the second cell.

As one embodiment, the one RRC IE of the configuration information for the second cell comprises the third cell identifier.

As one embodiment, the one RRC field of the configuration information for the second cell comprises the third cell identifier.

As one embodiment, the one first-type information block of the configuration information for the second cell comprises the third cell identifier.

As one embodiment, the one first-type information block of the configuration information for the second cell comprises one MIMOParam-r17 field, and the one MIMOParam-r17 field comprises the third cell identifier.

As one embodiment, the one first-type information block of the configuration information for the second cell comprises one additionalPCI-ToAddModList-r17 field, and the one additionalPCI-ToAddModList-r17 field comprises the third cell identifier.

As one embodiment, the one first-type information block of the configuration information for the second cell comprises one additionalPCI-r17 field, and the one additionalPCI-r17 field comprises the third cell identifier.

As one embodiment, the second cell is a source cell, and the first cell is a target cell.

As one embodiment, the second cell is the source cell, and the first cell is a target candidate cell.

As one embodiment, before the configuration information of the first cell is applied, the configuration information of the second cell is applied.

As one embodiment, before the configuration information of the first cell is applied, the configuration information of the second cell is released.

As one embodiment, after the configuration information of the first cell is applied, the configuration information of the second cell is released.

As one embodiment, in response to the behavior of applying the configuration information of the first cell, a configuration of the second cell is released.

As one embodiment, in response to the behavior of applying the configuration information of the first cell, the configuration of the second cell is not released.

### Embodiment 2

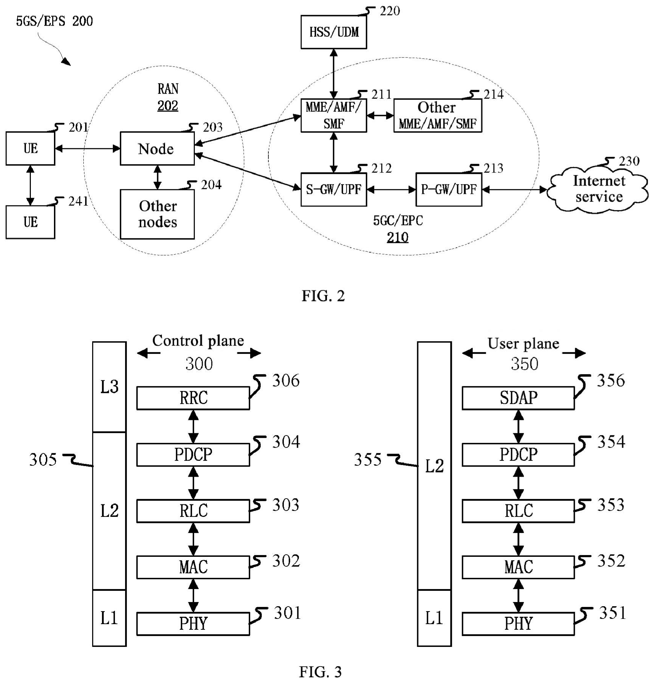

Embodiment 2 illustrates a schematic diagram of a network architecture according to one embodiment of the present application, as shown in FIG. 2. FIG. 2 illustrates a network architecture 200 of a 5G NR (New Radio)/LTE (Long-Term Evolution)/LTE-A (Long-Term Evolution Advanced) system. The 5G NR/LTE/LTE-A network architecture 200 may be referred to as a 5GS (5G System)/EPS (Evolved Packet System) 200 or some other suitable terminologies. The 5GS/EPS 200 comprises at least one of UE (User Equipment) 201, an RAN (Radio Access Network) 202, a 5GC (5G Core Network)/EPC (Evolved Packet Core) 210, an HSS (Home Subscriber Server)/UDM (Unified Data Management) 220, and an Internet Service 230. The 5GS/EPS may be interconnected with other access networks, but for simplicity, these entities/interfaces are not shown. As shown in the figure, the 5GS/EPS provides packet switching services, however, those skilled in the art will readily appreciate that the various concepts presented throughout the present application may be extended to networks that provide circuit switching services or other cellular networks. The RAN comprises a node 203 and other nodes 204. The node 203 provides user and control plane protocol termination towards the UE201. The node 203 may be connected to other nodes 204 via an Xn interface (e.g., backhaul)/X2 interface. The node 203 may also be referred to as a base station, a base transceiver station, a radio base station, a radio transceiving device, a transceiving device function, a basic service set (BSS), an extended service set (ESS), a TRP (transmitter receiver point), or some other suitable terminologies. The node 203 provides an access point to the 5GC/EPC210 for the UE201. Examples of the UE201 comprise a cellular phone, a smart phone, a session initiation protocol (SIP) phone, a laptop, a personal digital assistant (PDA), a satellite radio, non-terrestrial base station communication, satellite mobile communication, a global positioning system, a multimedia device, a video device, a digital audio player (e.g., an MP3 player), a camera, a game console, a drone, an aircraft, a narrowband Internet of Things device, a machine type communication device, a land vehicle, an automobile, a wearable device, or any other similarly functional device. Those skilled in the art may also refer to the UE201 as a mobile station, a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or some other suitable terminologies. The node 203 is connected to the 5GC/EPC210 via an S1/NG interface. The 5GC/EPC210 comprises an MME (Mobility Management Entity)/AMF (Authentication Management Field)/SMF (Session Management Function) 211, other MME/AMF/SMF214, an S-GW (Service Gateway)/UPF (User Plane Function) 212, and a P-GW (Packet Data Network Gateway)/UPF213. The MME/AMF/SMF211 is a control node that processes signaling between the UE201 and the 5GC/EPC210. Generally, the MME/AMF/SMF211 provides bearer and connection management. All user IP (Internet Protocol) packets are transmitted via the S-GW/UPF212, and the S-GW/UPF212 itself is connected to the P-GW/UPF213. The P-GW provides UE IP address allocation and other functions. The P-GW/UPF213 is connected to the Internet service 230. The Internet service 230 comprises operator-corresponding Internet protocol services, which may specifically comprise the Internet, an intranet, an IMS (IP Multimedia Subsystem), and a packet switching streaming service.

As one embodiment, the UE201 corresponds to a first node in the present application.

As one embodiment, the UE201 is one piece of user equipment (UE).

As one embodiment, the UE201 is one BaseStation device (BS).

As one embodiment, the UE201 is one relay device.

As one embodiment, the UE201 is one gateway device.

As one embodiment, the node 203 corresponds to a second node in the present application.

As one embodiment, the node 203 is one base station device.

As one embodiment, the node 203 is one piece of user equipment.

As one embodiment, the node 203 is one relay device.

As one embodiment, the node 203 is one gateway device.

Typically, the UE201 is one piece of user equipment, and the node 203 is one base station device.

Typically, the UE201 is one piece of user equipment, and the node 203 is one piece of user equipment.

Typically, the UE201 is one base station device, and the node 203 is one base station device.

As one embodiment, the user equipment supports transmission in a non-terrestrial network (NTN).

As one embodiment, the user equipment supports transmission in a terrestrial network.

As one embodiment, the user equipment supports dual connection (DC) transmission.

As one embodiment, the user equipment comprises an aircraft.

As one embodiment, the user equipment comprises a vehicle-mounted terminal.

As one embodiment, the user equipment comprises a ship.

As one embodiment, the user equipment comprises an IoT terminal.

As one embodiment, the user equipment comprises an industrial Internet of Things terminal.

As one embodiment, the user equipment comprises a device supporting low-latency and high-reliability transmission.

As one embodiment, the user equipment comprises a test device.

As one embodiment, the user equipment comprises a signaling tester.

As one embodiment, the user equipment comprises an IAB (Integrated Access and Backhaul)-MT.

As one embodiment, the user equipment supports generating reports using AI (Artificial Intelligence) or machine learning.

As one embodiment, the user equipment supports generating a trained model using training data or generating partial parameters in a trained model using trained data.

As one embodiment, the user equipment supports determining a first message through training.

As one embodiment, the user equipment supports determining a first cell through training.

As one embodiment, the user equipment is a terminal supporting Massive-MIMO.

As one embodiment, the base station device supports transmission in a non-terrestrial network.

As one embodiment, the base station device supports transmission in a terrestrial network.

As one embodiment, the base station device comprises a base transceiver station (BTS).

As one embodiment, the base station device comprises a NodeB (NB).

As one embodiment, the base station device comprises a gNB.

As one embodiment, the base station device comprises an eNB.

As one embodiment, the base station device comprises an ng-eNB.

As one embodiment, the base station device comprises an en-gNB.

As one embodiment, the base station device comprises a CU (Centralized Unit).

As one embodiment, the base station device comprises a DU (Distributed Unit).

As one embodiment, the base station device comprises a TRP (Transmitter Receiver Point).

As one embodiment, the base station device comprises a macro cellular base station.

As one embodiment, the base station device comprises a micro cell base station.

As one embodiment, the base station device comprises a pico cell base station.

As one embodiment, the base station device comprises a Femtocell.

As one embodiment, the base station device comprises a flight platform device.

As one embodiment, the base station device comprises a satellite device.

As one embodiment, the base station device comprises a test device.

As one embodiment, the base station device comprises a signaling tester.

As one embodiment, the base station device comprises a gateway device.

As one embodiment, the base station device comprises an IAB-node.

As one embodiment, the base station device comprises an IAB-donor.

As one embodiment, the base station device comprises an IAB-donor-CU.

As one embodiment, the base station device comprises an IAB-donor-DU.

As one embodiment, the base station device comprises an IAB-DU.

As one embodiment, the base station device comprises an IAB-MT.

As one embodiment, the base station device supports Massive-MIMO-based transmission.

As one embodiment, the base station device supports decompressing CSI using AI or deep learning.

### Embodiment 3

Embodiment 3 shows a schematic diagram of an embodiment of one wireless protocol architecture for a user plane and a control plane according to the present application, as shown in FIG. 3. FIG. 3 is a schematic diagram illustrating an embodiment of a radio protocol architecture for a user plane 350 and a control plane 300. FIG. 3 shows the radio protocol architecture for the control plane 300 using three layers: a Layer 1, a Layer 2, and a Layer 3. The Layer 1 (L1 layer) is the lowest layer and implements various PHY (Physical Layer) signal processing functions. The L1 layer will be referred to as a PHY301 herein. A Layer 2 (L2 layer) 305 is above the PHY301 and comprises a MAC (Medium Access Control) sublayer 302, an RLC (Radio Link Control) sublayer 303 and a PDCP (Packet Data Convergence Protocol) sublayer 304. The PDCP sublayer 304 provides multiplexing between different radio bearers and logical channels. The PDCP sublayer 304 also provides security by encrypting data packets, and provides handover support. The RLC sublayer 303 provides segmentation and reassembly of upper layer data packets, retransmission of lost data packets, and reordering of data packets to compensate for out-of-order reception caused by an HARQ (Hybrid Automatic Repeat Request). The MAC sublayer 302 provides multiplexing between logical and transport channels. The MAC sublayer 302 is also responsible for allocating various radio resources (e.g., resource blocks) in one cell. The MAC sublayer 302 is also responsible for HARQ operations. An RRC (Radio Resource Control) sublayer 306 in the Layer 3 (L3 layer) of the control plane 300 is responsible for obtaining radio resources (i.e., radio bearers) and configuring lower layers using RRC signaling. The radio protocol architecture for the user plane 350 comprises the Layer 1 (L1 layer) and the Layer 2 (L2 layer). The radio protocol architecture in the user plane 350 is substantially the same as the corresponding layers and sublayers in the control plane 300 for a physical layer 351, a PDCP sublayer 354 in an L2 layer 355, an RLC sublayer 353 in the L2 layer 355, and a MAC sublayer 352 in the L2 layer 355, but the PDCP sublayer 354 also provides header compression for upper layer data packets to reduce radio transmission overhead. The L2 layer 355 in the user plane 350 also comprises an SDAP (Service Data Adaptation Protocol) sublayer 356, and the SDAP sublayer 356 is responsible for mapping between a QoS stream and a data radio bearer (DRB) to support the diversity of services.

As one embodiment, the wireless protocol architecture in FIG. 3 is applicable to a first node in the present application.

As one embodiment, the wireless protocol architecture in FIG. 3 is applicable to a second node in the present application.

As one embodiment, the wireless protocol architecture in FIG. 3 is applicable to a third node in the present application.

As one embodiment, a first message in the present application is generated in an RRC306.

As one embodiment, the first message in the present application is generated in a MAC302 or a MAC352.

As one embodiment, the first message in the present application is generated in the PHY301 or a PHY351.

As one embodiment, a third threshold in the present application is generated in the RRC306.

As one embodiment, the third threshold in the present application is generated in the MAC302 or the MAC352.

As one embodiment, the third threshold in the present application is generated in the PHY301 or the PHY351.

As one embodiment, a first threshold in the present application is generated in the RRC306.

As one embodiment, the first threshold in the present application is generated in the MAC302 or the MAC352.

As one embodiment, the first threshold in the present application is generated in the PHY301 or the PHY351.

As one embodiment, a first signal in the present application is generated in the RRC306.

As one embodiment, the first signal in the present application is generated in the MAC302 or the MAC352.

As one embodiment, the first signal in the present application is generated in the PHY301 or the PHY351.

### Embodiment 4

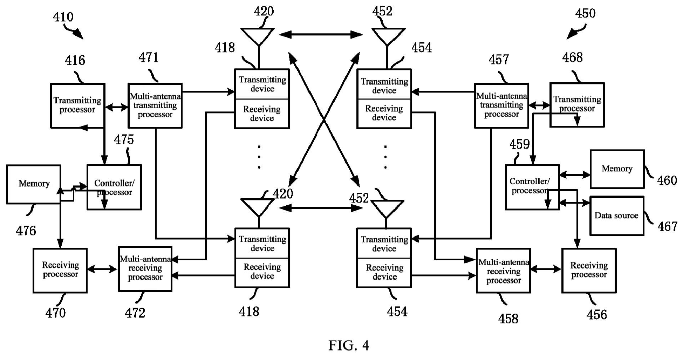

Embodiment 4 shows a schematic diagram of a first communication device and a second communication device according to the present application, as shown in FIG. 4. FIG. 4 is a block diagram of a first communication device 450 and a second communication device 410 communicating with each other in an access network.

The first communication device 450 comprises a controller/processor 459, a memory 460, a data source 467, a transmitting processor 468, a receiving processor 456, a multi-antenna transmitting processor 457, a multi-antenna receiving processor 458, a transmitting device/receiving device 454, and an antenna 452.

The second communication device 410 comprises a controller/processor 475, a memory 476, a receiving processor 470, a transmitting processor 416, a multi-antenna receiving processor 472, a multi-antenna transmitting processor 471, a transmitting device/receiving device 418, and an antenna 420.

In transmission from the second communication device 410 to the first communication device 450, at the second communication device 410, upper-layer data packets from a core network are provided to the controller/processor 475. The controller/processor 475 implements the functionality of an L2 layer. In the transmission from the second communication device 410 to the first communication device 450, the controller/processor 475 provides header compression, encryption, packet segmentation and reordering, multiplexing between logical and transport channels, and radio resource allocation to the first communication device 450 based on various priority metrics. The controller/processor 475 is also responsible for retransmission of lost packets and signaling to the first communication device 450. The transmitting processor 416 and the multi-antenna transmitting processor 471 implement various signal processing functions for an L1 layer (i.e., a physical layer). The transmitting processor 416 implements coding and interleaving to facilitate forward error correction (FEC) at the second communication device 410 and mapping of signal constellations based on various modulation schemes (e.g., binary phase shift keying (BPSK), quadrature phase shift keying (QPSK), M-phase shift keying (M-PSK), and M-quadrature amplitude modulation (M-QAM)). The multi-antenna transmitting processor 471 performs digital spatial precoding, comprising codebook-based precoding and non-codebook-based precoding, and beamforming processing on coded and modulated symbols to generate one or more spatial streams. The transmitting processor 416 then maps each spatial stream to a subcarrier, multiplexes it with a reference signal (e.g., pilot) in a time domain and/or frequency domain, and then uses an inverse fast Fourier transform (IFFT) to generate a physical channel carrying a time-domain multi-carrier symbol stream. The multi-antenna transmitting processor 471 then performs sending analog precoding/beamforming operations on the time-domain multi-carrier symbol stream. Each transmitting device 418 converts a baseband multi-carrier symbol stream provided by the multi-antenna transmitting processor 471 into a radio frequency stream, and then provides it to different antennas 420.

In the transmission from the second communication device 410 to the first communication device 450, at the first communication device 450, each receiving device 454 receives a signal through its corresponding antenna 452. Each receiving device 454 recovers information modulated onto a radio frequency carrier and converts the radio frequency stream into a baseband multi-carrier symbol stream and provides it to the receiving processor 456. The receiving processor 456 and the multi-antenna receiving processor 458 implement various signal processing functions of the L1 layer. The multi-antenna receiving processor 458 performs receiving analog precoding/beamforming operations on a baseband multi-carrier symbol stream from the receiving device 454. The receiving processor 456 uses a fast Fourier transform (FFT) to convert the baseband multi-carrier symbol stream after the receiving analog precoding/beamforming operations from the time domain to the frequency domain. In the frequency domain, a physical layer data signal and a reference signal are demultiplexed by the receiving processor 456, wherein the reference signal is used for channel estimation, and the data signal is subjected to multi-antenna detection in the multi-antenna receiving processor 458 to recover any spatial stream destined for the first communication device 450. Symbols on each spatial stream are demodulated and recovered in the receiving processor 456, and soft decisions are generated. The receiving processor 456 then decodes and deinterleaves the soft decisions to recover upper-layer data and control signals transmitted by the second communication device 410 on the physical channel. The upper-layer data and the control signals are then provided to the controller/processor 459. The controller/processor 459 implements the functions of the L2 layer. The controller/processor 459 may be associated with a memory 460 storing program codes and data. The memory 460 may be referred to as a computer-readable medium. In the transmission from the second communication device 410 to the second communication device 450, the controller/processor 459 provides demultiplexing between transport and logical channels, packet reassembly, decryption, header decompression, and control signal processing to recover the upper-layer data packets from the core network. The upper-layer data packets are then provided to all protocol layers above the L2 layer. Various control signals may also be provided to an L3 for L3 processing.

In transmission from the first communication device 450 to the second communication device 410, at the first communication device 450, a data source 467 is used for providing the upper-layer data packets to the controller/processor 459. The data source 467 represents all protocol layers above the L2 layer. Similar to the sending function at the second communication device 410 described in the transmission from the second communication device 410 to the first communication device 450, the controller/processor 459 implements header compression, encryption, packet segmentation and reordering, and multiplexing between logical and transport channels based on radio resource allocation, and implements L2 layer functions for the user plane and control plane. The controller/processor 459 is also responsible for retransmission of lost packets and signaling to the second communication device 410. The transmitting processor 468 executes modulation mapping and channel coding processing, the multi-antenna transmitting processor 457 performs digital multi-antenna spatial precoding, comprising codebook-based precoding and non-codebook-based precoding, and beamforming processing, and then the transmitting processor 468 modulates the generated spatial stream into a multi-carrier/single-carrier symbol stream, which is then provided to different antennas 452 via the transmitting device 454 after the analog precoding/beamforming operations in the multi-antenna transmitting processor 457. Each transmitting device 454 first converts the baseband symbol stream provided by the multi-antenna transmitting processor 457 into a radio frequency symbol stream, which is then provided to the antenna 452.

In the transmission from the first communication device 450 to the second communication device 410, the functions at the second communication device 410 are similar to the receiving functions at the first communication device 450 described in the transmission from the second communication device 410 to the first communication device 450. Each receiving device 418 receives a radio frequency signal through its corresponding antenna 420, converts the received radio frequency signal into a baseband signal, and provides the baseband signal to the multi-antenna receiving processor 472 and the receiving processor 470. The receiving processor 470 and the multi-antenna receiving processor 472 jointly implement the functions of the L1 layer. The controller/processor 475 implements the functions of the L2 layer. The controller/processor 475 may be associated with the memory 476 storing program codes and data. The memory 476 may be referred to as a computer-readable medium. In the transmission from the first communication device 450 to the second communication device 410, the controller/processor 475 provides demultiplexing between transport and logical channels, packet reassembly, decryption, header decompression, and control signal processing to recover upper-layer data packets from UE450. Upper-layer data packets from the controller/processor 475 may be provided to the core network.

As one embodiment, the first communication device 450 comprises: at least one processor and at least one memory, wherein the at least one memory comprises computer program codes; the at least one memory and the computer program codes are configured to be used together with the at least one processor, and the first communication device 450 at least: receives a first message, the first message comprising configuration information for each cell among at least one cell; determines a first cell, the first cell being one cell among the at least one cell; and applies configuration information of the first cell, wherein determination of the first cell depends on at least a third cell identifier; the third cell identifier is different from an identifier of the first cell; configuration information of a second cell comprises the third cell identifier; and before the configuration information of the first cell is applied, the configuration information of the second cell is applied, and a spatial filter of at least one RS resource associated with the third cell identifier is applied to wireless transmission.

As one embodiment, the first communication device 450 comprises: a memory storing a computer-readable instruction program, wherein the computer-readable instruction program generates actions when executed by at least one processor, and the actions comprise: receiving the first message, the first message comprising the configuration information for each cell among at least one cell; determining the first cell, the first cell being one cell among the at least one cell; and applying the configuration information of the first cell, wherein the determination of the first cell depends on at least the third cell identifier; the third cell identifier is different from the identifier of the first cell; the configuration information of the second cell comprises the third cell identifier; and before the configuration information of the first cell is applied, the configuration information of the second cell is applied, and the spatial filter of at least one RS resource associated with the third cell identifier is applied to the wireless transmission.

As one embodiment, the second communication device 410 corresponds to a second node in the present application, and the second communication device 410 comprises: at least one processor and at least one memory, wherein the at least one memory comprises computer program codes; and the at least one memory and the computer program codes are configured to be used together with the at least one processor. The second communication device 410 at least: sends the first message, the first message comprising the configuration information for each cell among at least one cell, wherein a recipient of the first message determines the first cell, and the first cell is one cell among the at least one cell; the recipient of the first message applies the configuration information of the first cell; the determination of the first cell depends on at least the third cell identifier; the third cell identifier is different from the identifier of the first cell; the configuration information of the second cell comprises the third cell identifier; and before the configuration information of the first cell is applied, the configuration information of the second cell is applied, and the spatial filter of at least one RS resource associated with the third cell identifier is applied to the wireless transmission.

As one embodiment, the second communication device 410 corresponds to the second node in the present application, and the second communication device 410 comprises: a memory storing a computer-readable instruction program, wherein the computer-readable instruction program generates actions when executed by at least one processor, and the actions comprise: sending the first message, the first message comprising the configuration information for each cell among at least one cell, wherein the recipient of the first message determines the first cell, and the first cell is one cell among the at least one cell; the recipient of the first message applies the configuration information of the first cell; the determination of the first cell depends on at least the third cell identifier; the third cell identifier is different from the identifier of the first cell; the configuration information of the second cell comprises the third cell identifier; and before the configuration information of the first cell is applied, the configuration information of the second cell is applied, and the spatial filter of at least one RS resource associated with the third cell identifier is applied to the wireless transmission.

As one embodiment, the second communication device 410 corresponds to a third node in the present application, and the second communication device 410 comprises: at least one processor and at least one memory, wherein the at least one memory comprises computer program codes; and the at least one memory and the computer program codes are configured to be used together with the at least one processor. The second communication device 410 at least: receives a first signal on the first cell, wherein a sender of the first signal receives the first message, and the first message comprises the configuration information for each cell among at least one cell; the sender of the first signal determines the first cell, and the first cell is one cell among the at least one cell; the sender of the first signal applies the configuration information of the first cell; the determination of the first cell depends on at least the third cell identifier; the third cell identifier is different from the identifier of the first cell; the configuration information of the second cell comprises the third cell identifier; before the configuration information of the first cell is applied, the configuration information of the second cell is applied, and the spatial filter of at least one RS resource associated with the third cell identifier is applied to the wireless transmission; and the first signal indicates that the configuration information of the first cell is applied.

As one embodiment, the second communication device 410 corresponds to the third node in the present application, and the second communication device 410 comprises: a memory storing a computer-readable instruction program, wherein the computer-readable instruction program generates actions when executed by at least one processor, and the actions comprise: receiving the first signal on the first cell, wherein the sender of the first signal receives the first message, and the first message comprises the configuration information for each cell among at least one cell; the sender of the first signal determines the first cell, and the first cell is one cell among the at least one cell; the sender of the first signal applies the configuration information of the first cell; the determination of the first cell depends on at least the third cell identifier; the third cell identifier is different from the identifier of the first cell; the configuration information of the second cell comprises the third cell identifier; before the configuration information of the first cell is applied, the configuration information of the second cell is applied, and the spatial filter of at least one RS resource associated with the third cell identifier is applied to the wireless transmission; and the first signal indicates that the configuration information of the first cell is applied.

As one embodiment, at least one of the antenna 452, the receiving device 454, the receiving processor 456, and the controller/processor 459 is used for receiving the first message.

As one embodiment, at least one of the antenna 420, the transmitting device 418, the transmitting processor 416, and the controller/processor 475 is used for sending the first message.

As one embodiment, at least one of the antenna 452, the receiving device 454, the receiving processor 456, and the controller/processor 459 is used for receiving a third threshold.

As one embodiment, at least one of the antenna 420, the transmitting device 418, the transmitting processor 416, and the controller/processor 475 is used for sending the third threshold.

As one embodiment, at least one of the antenna 452, the receiving device 454, the receiving processor 456, and the controller/processor 459 is used for receiving a first threshold.

As one embodiment, at least one of the antenna 420, the transmitting device 418, the transmitting processor 416, and the controller/processor 475 is used for sending the first threshold.

As one embodiment, at least one of the antenna 452, the transmitting device 454, the transmitting processor 468, and the controller/processor 459 is used for sending the first signal.

As one embodiment, at least one of the antenna 420, the transmitting device 418, the transmitting processor 416, and the controller/processor 475 is used for receiving the first signal.

As one embodiment, the first communication device 450 corresponds to a first node in the present application.

As one embodiment, the first communication device 450 is one piece of user equipment.

As one embodiment, the first communication device 450 is one base station device.

As one embodiment, the first communication device 450 is one relay device.

As one embodiment, the second communication device 410 is one piece of user equipment.

As one embodiment, the second communication device 410 is one base station device.

As one embodiment, the second communication device 410 is one relay device.

### Embodiment 5

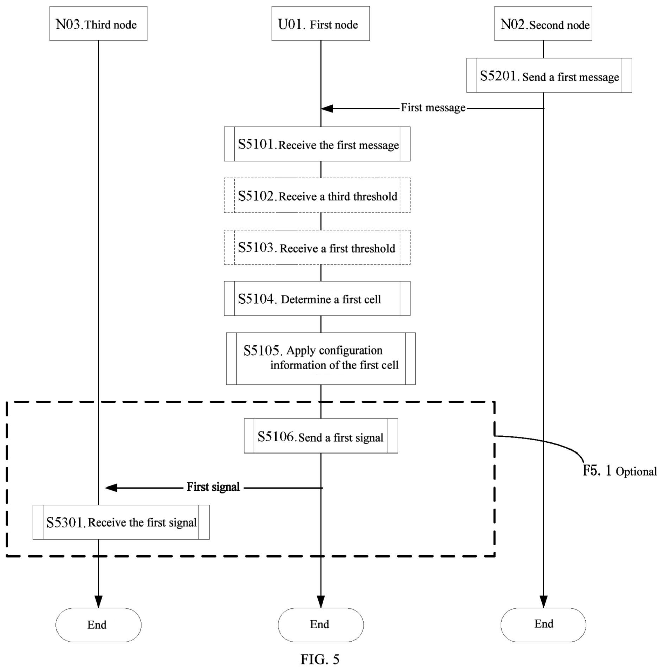

Embodiment 5 illustrates a flowchart of wireless signal transmission according to one embodiment of the present application, as shown in FIG. 5. It should be particularly noted that an order in this example does not limit a signal transmission order and an implementation order in the present application.

For a **first node U01,** in step S5101, a first message is received, and the first message comprises configuration information for each cell among at least one cell; in step S5102, a third threshold is received; in step S5103, a first threshold is received, and the first threshold is for a first cell; in step S5104, the first cell is determined, and the first cell is one cell among the at least one cell; in step S5105, configuration information of the first cell is applied; and in step S5106, a first signal is sent on the first cell.

For a **second node N02,** in step S5201, the first message is sent.

For a **third node N03,** in step S5301, the first signal is received.

In Embodiment 5, determination of the first cell depends on at least a third cell identifier; the third cell identifier is different from an identifier of the first cell; configuration information of a second cell comprises the third cell identifier; and before the configuration information of the first cell is applied, the configuration information of the second cell is applied, and a spatial filter of at least one RS resource associated with the third cell identifier is applied to wireless transmission.

As one embodiment, the step S5103 is before the step S5102.

As one embodiment, the step S5104 is before the step S5102.

As one embodiment, the step S5103 belongs to the step S5101.

As one embodiment, the step S5104 belongs to the step S5101.

As one embodiment, the behavior of executing radio link monitoring on the second cell does not depend on whether a spatial filter of an RS resource associated with the third cell identifier is applied to the wireless transmission.

As one embodiment, the first node U01 and the second node N02 are connected in a wireless mode.

As one embodiment, the first node U01 and the second node N02 are connected in a wired mode.

As one embodiment, the first node U01 and the second node N02 are connected through a Uu interface.

As one embodiment, the first node U01 and the second node N02 are connected through an IAB interface.

As one embodiment, the first node U01 and the second node N02 are connected through a PC5 interface.

As one embodiment, the first node U01 and the third node N03 are connected in a wireless mode.

As one embodiment, the first node U01 and the third node N03 are connected in a wired mode.

As one embodiment, the first node U01 and the third node N03 are connected through a Uu interface.

As one embodiment, the first node U01 and the third node N03 are connected through an IAB interface.

As one embodiment, the first node U01 and the third node N03 are connected through a PC5 interface.

As one embodiment, the second node N02 and the third node N03 are connected in a wireless mode.

As one embodiment, the second node N02 and the third node N03 are connected in a wired mode.

As one embodiment, the second node N02 and the third node N03 are connected through an Xn interface.

As one embodiment, the second node N02 and the third node N03 are connected through an IAB interface.

As one embodiment, the second node N02 and the third node N03 are connected through a PC5 interface.

As one embodiment, the step S5103 is optional.

As one embodiment, the step S5104 is optional.

As one embodiment, the step S5103 does not exist, and the step S5104 exists.

As one sub-embodiment of the above embodiment, the third threshold does not exist, and the first threshold exists.

As one sub-embodiment of the above embodiment, the third threshold does not exist, and the first threshold is invalid.

As one sub-embodiment of the above embodiment, the third threshold does not exist, the first threshold exists, and the first threshold is invalid.

As one embodiment, the step S5103 exists, and the step S5104 does not exist.

As one sub-embodiment of the above embodiment, the phrase "the determination of the first cell depends on the third cell identifier" means that: the determination of the first cell depends on a measurement result for the RS resource associated with the third cell identifier being not better than or worse than the third threshold.

As one sub-embodiment of the above embodiment, the determination of the first cell depends on the measurement result for the RS resource associated with the third cell identifier being not better than the third threshold.

As one sub-embodiment of the above embodiment, the determination of the first cell depends on the measurement result for the RS resource associated with the third cell identifier being worse than the third threshold.

As one sub-embodiment of the above embodiment, when the measurement result for the RS resource associated with the third cell identifier is not better than the third threshold, the first cell is determined.

As one sub-embodiment of the above embodiment, when the measurement result for the RS resource associated with the third cell identifier is worse than the third threshold, the first cell is determined.

As one sub-embodiment of the above embodiment, the first message comprises the third threshold.

As one sub-embodiment of the above embodiment, one RRC message other than the first message comprises the third threshold.

As one embodiment, the step S5103 exists, and the step S5104 exists.

As one sub-embodiment of the above embodiment, the step S5104 is after the step S5103.

As one sub-embodiment of the above embodiment, the step S5104 is before the step S5103.

As one sub-embodiment of the above embodiment, the step S5104 and the step S5103 are executed simultaneously.

As one sub-embodiment of the above embodiment, the threshold is preconfigured.

As one sub-embodiment of the above embodiment, the threshold is configurable.

As one sub-embodiment of the above embodiment, the third threshold exists, and the first threshold exists.

As one sub-embodiment of the above embodiment, the third threshold and the first threshold are simultaneously configured for a same triggering event, to determine the first cell.

As one sub-embodiment of the above embodiment, the third threshold and the first threshold are simultaneously configured for the same triggering event, the measurement result for the RS resource associated with the third cell identifier is not better than the third threshold, and a measurement result for the first cell is better than the first threshold, to determine the first cell.

As one sub-embodiment of the above embodiment, the third threshold and the first threshold are simultaneously configured for the same triggering event, the measurement result for the RS resource associated with the third cell identifier is not better than the third threshold, and the measurement result for the first cell is not worse than the first threshold, to determine the first cell.

As one sub-embodiment of the above embodiment, the third threshold and the first threshold are simultaneously configured for the same triggering event, the measurement result for the RS resource associated with the third cell identifier is worse than the third threshold, and the measurement result for the first cell is better than the first threshold, to determine the first cell.

As one sub-embodiment of the above embodiment, the third threshold and the first threshold are simultaneously configured for the same triggering event, the measurement result for the RS resource associated with the third cell identifier is worse than the third threshold, and the measurement result for the first cell is not worse than the first threshold, to determine the first cell.

As one embodiment, the step S5103 does not exist, and the step S5104 does not exist.

As one embodiment, a dotted block F5.1 is optional.

As one embodiment, the dotted block F5.1 exists.

As one sub-embodiment of the above embodiment, the first signal is one measurement report.

As one sub-embodiment of the above embodiment, the first signal is one RRC message.

As one sub-embodiment of the above embodiment, the first signal is requested by BFR (Beam Failure Recovery).

As one sub-embodiment of the above embodiment, the first signal is one HARQ ACK.

As one sub-embodiment of the above embodiment, the first signal is transmitted through a PUCCH.

As one sub-embodiment of the above embodiment, the first signal is one piece of UCI.

As one sub-embodiment of the above embodiment, the first signal is one SR.

As one sub-embodiment of the above embodiment, the first signal is transmitted through a PUSCH.

As one sub-embodiment of the above embodiment, the first signal is one MAC CE.

As one sub-embodiment of the above embodiment, the first signal belongs to one MAC CE.

As one sub-embodiment of the above embodiment, the first signal belongs to one BFR MAC CE.

As one sub-embodiment of the above embodiment, the first signal is transmitted through a PRACH (Physical Random Access Channel).

As one sub-embodiment of the above embodiment, the first signal is sent on a PRACH.

As one sub-embodiment of the above embodiment, the first signal is one Preamble.

As one sub-embodiment of the above embodiment, the first signal is one PRACH repetition.

As one sub-embodiment of the above embodiment, the first signal is associated with the first cell.

As one sub-embodiment of the above embodiment, the first signal indicates an index of a first cell identifier.

As one sub-embodiment of the above embodiment, the first signal indicates an index of an RS resource of the first cell.

As one sub-embodiment of the above embodiment, a Candidate RS ID field in the first signal is set to an RS resource of the first cell.

As one sub-embodiment of the above embodiment, the first signal indicates that the RS resource of the first cell is a candidate RS resource.

As one embodiment, the first signal is an RRCReconfigurationComplete message.

As one embodiment, the first signal is an RRCResumeComplete message.

As one embodiment, the first signal is an RRCReestabilshmentComplete message.

As one embodiment, the dotted block F5.1 does not exist.

As one embodiment, the phrase "the configuration information of the first cell is applied" means: successfully connecting to the first cell.

As one embodiment, the phrase "the configuration information of the first cell is applied" means: successfully switching to the first cell.

As one embodiment, the phrase "the configuration information of the first cell is applied" means: successfully handing over to the first cell.

As one embodiment, the phrase "the configuration information of the first cell is applied" means that: a spatial filter of any RS resource associated with the first cell is applied to the wireless transmission.

As one embodiment, the phrase "the configuration information of the first cell is applied" means: the spatial filter of any RS resource associated with the first cell is applied to the wireless transmission, and the spatial filter of the RS resource associated with the third cell identifier is not applied to the wireless transmission.

As one embodiment, the phrase "the configuration information of the first cell is applied" means: the spatial filter of any RS resource associated with the first cell is applied to the wireless transmission, and the spatial filter of the RS resource associated with the second cell is not applied to the wireless transmission.

As one embodiment, "the first threshold is valid" means: the first threshold is used for determining the first cell; and "the first threshold is invalid" means: the first threshold is not used for determining the first cell.

### Embodiment 6

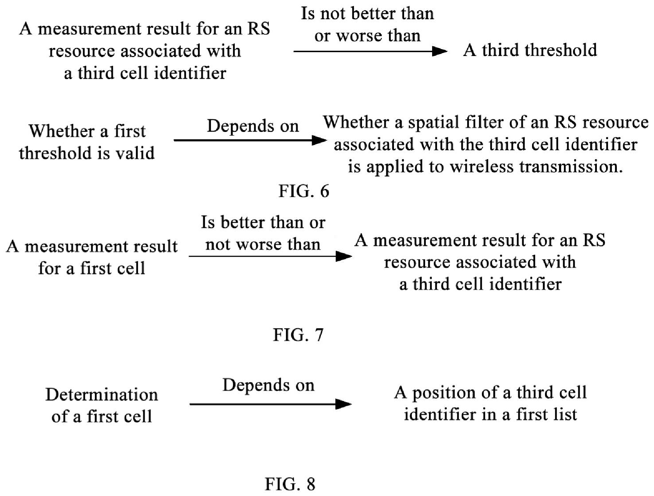

Embodiment 6 shows a schematic diagram in which determination of a first cell depends on a measurement result for an RS resource associated with a third cell identifier being not better than or worse than a third threshold according to one embodiment of the present application, as shown in FIG. 6.

In Embodiment 6, a first threshold is for the first cell, wherein the first threshold and the third threshold are configured for a same triggering event; and whether the first threshold is valid depends on whether a spatial filter of an RS resource associated with the third cell identifier is applied to wireless transmission.

As one embodiment, configuration information of a second cell comprises only one cell identifier, and the only one cell identifier is the third cell identifier.

As one embodiment, the configuration information of the second cell comprises a plurality of cell identifiers, and the third cell identifier is one cell identifier among the plurality of cell identifiers.

As one embodiment, the third threshold is dedicated to the third cell identifier.

As one embodiment, the third threshold is configured for only the third cell identifier among the plurality of cell identifiers; and the third cell identifier is one cell identifier among the plurality of cell identifiers.

As one embodiment, any cell identifier among the plurality of cell identifiers is configured with one threshold; and the third cell identifier is one cell identifier among the plurality of cell identifiers.

As one embodiment, the third threshold is dedicated to the second cell.

As one embodiment, the plurality of cell identifiers share the third threshold; and the third cell identifier is one cell identifier among the plurality of cell identifiers.

As one embodiment, the plurality of cell identifiers share the third threshold with the second cell; and the third cell identifier is one cell identifier among the plurality of cell identifiers.

As one embodiment, when the measurement result for the RS resource associated with the third cell identifier is not better than the third threshold, the first cell is determined.

As one embodiment, when the measurement result for the RS resource associated with the third cell identifier is worse than the third threshold, the first cell is determined.

As one sub-embodiment of this embodiment, the behavior of determining the first cell is independent of a measurement result for the first cell.

As one embodiment, the not better than is greater than or equal to, and the worse than is less than.

As one embodiment, the not better than is less than or equal to, and the worse than is greater than.

As one embodiment, when the spatial filter of the RS resource associated with the third cell identifier is not applied to the wireless transmission, the first threshold is valid.

As one embodiment, as long as the spatial filter of the RS resource associated with the third cell identifier is applied to the wireless transmission, the first threshold is invalid.

As one embodiment, a first message comprises the first threshold and the third threshold.

As one embodiment, one RRC message other than the first message comprises the first threshold and the third threshold.

As one embodiment, the first threshold is dedicated to the first cell in the at least one cell.

As one embodiment, the first threshold is shared by the at least one cell.

As one embodiment, the first threshold is for the first cell, and the third threshold is for the second cell.

As one embodiment, the first threshold is for the first cell, and the third threshold is for a third cell.

As one embodiment, a second threshold is received, wherein the second threshold is for the second cell; the first threshold is for the first cell; and the third threshold is for the third cell.

As one embodiment, the first threshold is invalid and measurement on the first cell is not executed; and the first threshold is valid and the measurement on the first cell is executed.

As one embodiment, when the measurement result for the RS resource associated with the third cell identifier is not better than the third threshold, and the measurement result for the first cell is better than the first threshold, the first cell is determined.

As one embodiment, when the measurement result for the RS resource associated with the third cell identifier is worse than the third threshold, and the measurement result for the first cell is not worse than the first threshold, the first cell is determined.

As one embodiment, the better than is greater than, and the not worse than is not less than.

As one embodiment, the better than is less than, and the not worse than is not greater than.

The above method shortens delay.

The above method avoids delayed handover.

As one embodiment, the threshold is configurable.

As one embodiment, the threshold is preconfigured.

As one embodiment, the third threshold is invalid, and the first threshold is invalid.

As one embodiment, "the third threshold is valid" means that: the third threshold is used for determining the first cell; and "the third threshold is invalid" means that: the third threshold is not used for determining the first cell.

### Embodiment 7

Embodiment 7 illustrates a schematic diagram in which determination of a first cell depends on a measurement result for the first cell being better than or not worse than a measurement result for an RS resource associated with a third cell identifier according to one embodiment of the present application, as shown in FIG. 7.

In Embodiment 7, the phrase "determination of the first cell depends on the third cell identifier" means that: the determination of the first cell depends on a measurement result for the first cell being better than or not worse than the measurement result for the RS resource associated with the third cell identifier.

As one embodiment, the measurement result for the first cell is better than the measurement result for the RS resource associated with the third cell identifier, to determine the first cell.

As one embodiment, the measurement result for the first cell is not worse than the measurement result for the RS resource associated with the third cell identifier, to determine the first cell.

As one embodiment, the measurement result for the first cell is a BLER.

As one embodiment, the measurement result for the first cell is L1-RSRP.

As one embodiment, the measurement result for the first cell is SS-RSRP.

As one embodiment, the measurement result for the first cell is CSI-RSRP.

As one embodiment, the measurement result for the first cell is an L3 measurement result.

As one embodiment, the measurement result for the RS resource associated with the third cell identifier is the BLER.

As one embodiment, the measurement result for the RS resource associated with the third cell identifier is the L1-RSRP.

As one embodiment, the measurement result for the RS resource associated with the third cell identifier is the SS-RSRP.

As one embodiment, the measurement result for the RS resource associated with the third cell identifier is the CSI-RSRP.

As one embodiment, the measurement result for the RS resource associated with the third cell identifier is the L3 measurement result.

The above method improves reliability of the measurement result.

### Embodiment 8

Embodiment 8 illustrates a schematic diagram in which determination of a first cell depends on a position of a third cell identifier in a first list according to one embodiment of the present application, as shown in FIG. 8.

In Embodiment 8, the determination of the first cell depends on the position of the third cell identifier in the first list, and before the first cell is determined, a spatial filter of an RS resource associated with the third cell is applied to wireless transmission.

As one embodiment, the determination of the first cell depends on the position of the third cell identifier in the first list.

As one embodiment, the determination of the first cell depends on the position of the third cell identifier in the first list, and configuration information of a second cell comprises the first list.

As one embodiment, the determination of the first cell depends on the position of the third cell identifier in the first list, the configuration information of the second cell comprises the first list, and the first list comprises at least one cell identifier.

As one embodiment, the determination of the first cell depends on the position of the third cell identifier in the first list, the configuration information of the second cell comprises the first list, the first list comprises at least one cell identifier, and the third cell identifier is one cell identifier among the at least one cell identifier.

As one embodiment, the third cell identifier is different from a first cell identifier.

As one embodiment, the third cell identifier is located in the first list.

As one embodiment, the third cell identifier is one parameter in the first list.

As one embodiment, "before the first cell is determined" comprises: within at least one time interval before the first cell is determined.

As one embodiment, "before the first cell is determined" comprises: before the behavior of applying an RS resource associated with the first cell to the wireless transmission.

As one embodiment, "before the first cell is determined" comprises: within at least one time interval before configuration information of the first cell is applied.

As one embodiment, the configuration information of the second cell comprises the first list, the first list comprises at least one cell identifier, and the third cell identifier is one cell identifier among the at least one cell identifier; and the determination of the first cell depends on the position of the third cell identifier in the first list.

As one sub-embodiment of the above embodiment, "the configuration information of the second cell comprises the first list" means that: before the configuration information of the first cell is applied, the configuration information of the second cell is applied.

As one sub-embodiment of the above embodiment, "the configuration information of the second cell comprises the first list" means that: before the configuration information of the first cell is applied, the configuration information of the second cell is applied, and the spatial filter of the RS resource associated with the third cell identifier is applied to the wireless transmission.

As one sub-embodiment of the above embodiment, the first list contains at least one ServingCellConfig IE.

As one sub-embodiment of the above embodiment, the first list contains at least one additionalPCI-r17 field.

As one sub-embodiment of the above embodiment, the first list comprises a TCI (Transmission Configuration Indicator) state indication.

As one sub-embodiment of the above embodiment, the first list contains at least one cell identifier.

As one sub-embodiment of the above embodiment, the first list contains the third cell identifier.

As one sub-embodiment of the above embodiment, the first list is the third cell identifier.

As one embodiment, the determination of the first cell depends on a measurement result of the RS resource associated with the third cell identifier, a third threshold, and the position of the third cell identifier in the first list; and before the configuration information of the first cell is applied, the configuration information of the second cell is applied.

As one embodiment, the determination of the first cell depends on the measurement result of the RS resource associated with the third cell identifier, a measurement result of the resource of the first cell, the third threshold and a first threshold, and the position of the third cell identifier in the first list; and before the configuration information of the first cell is applied, the configuration information of the second cell is applied.

As one embodiment, the determination of the first cell depends on the measurement result of the RS resource associated with the third cell identifier, the measurement result of the resource of the first cell, and the position of the third cell identifier in the first list; and before the configuration information of the first cell is applied, the configuration information of the second cell is applied.

As one embodiment, the phrase "the determination of the first cell depends on the position of the third cell identifier in the first list" means that: the third cell identifier being a first cell identifier in the first list is used for determining the first cell.

As one embodiment, the phrase "the determination of the first cell depends on the position of the third cell identifier in the first list" means that: the third cell identifier being a last cell identifier in the first list is used for determining the first cell.

As one embodiment, the phrase "the determination of the first cell depends on the position of the third cell identifier in the first list" means that: the third cell identifier being a specified cell identifier in the first list is used for determining the first cell.

As one embodiment, an index of the third cell identifier indicates the position of the third cell identifier in the first list.

As one embodiment, an order of the third cell identifier in the first list indicates the position of the third cell identifier in the first list.

### Embodiment 9

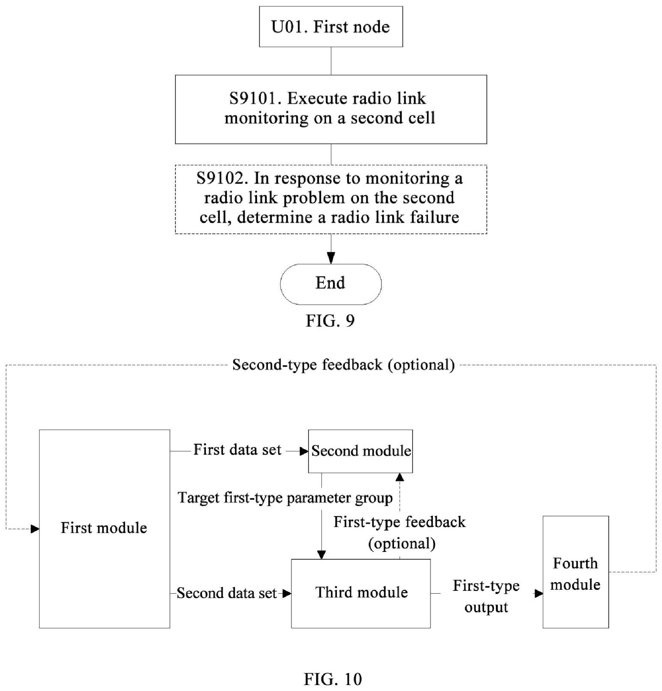

Embodiment 9 illustrates a flowchart of executing radio link monitoring on a second cell according to one embodiment of the present application, as shown in FIG. 9.

For a **first node U01,** in step S9101, the radio link monitoring is executed on the second cell; andin step S9102, in response to monitoring a radio link problem on the second cell, a radio link failure is determined.

As one embodiment, the behavior of executing radio link monitoring on the second cell means: executing the radio link monitoring for the second cell.

As one embodiment, the behavior of executing radio link monitoring on the second cell means: executing the radio link monitoring that is on the second cell.

As one embodiment, the behavior of executing radio link monitoring on the second cell means: executing the radio link monitoring according to at least an RS resource of the second cell.

As one embodiment, the behavior of executing radio link monitoring on the second cell means: executing the radio link monitoring according to an RS resource configured for the second cell.

As one embodiment, the radio link failure is an RLF (Radio Link Failure).

As one embodiment, the radio link failure is a BLF (Beam Link Failure).

As one embodiment, the behavior of executing radio link monitoring comprises: monitoring a PDCCH.

As one embodiment, the behavior of executing radio link monitoring comprises: monitoring an RS resource configured for the radio link monitoring.

As one embodiment, the behavior of executing radio link monitoring means: Radio Link Monitoring (RLM).

As one embodiment, the behavior of executing radio link monitoring means: Beam Failure Detection (BFD).

As one embodiment, the behavior of executing radio link monitoring comprises: receiving one indication from a physical layer, and in response to receiving the one indication, incrementing a first counter.

As one embodiment, the behavior of executing radio link monitoring comprises: when at least a first timer is not running, receiving one indication from the physical layer, and in response to receiving the one indication, incrementing the first counter by 1.

As one embodiment, the behavior of executing radio link monitoring comprises: receiving another indication from the physical layer, and in response to receiving the another indication, resetting the first counter.

As one embodiment, the behavior of executing radio link monitoring comprises: receiving another indication from the physical layer, and in response to receiving the another indication, incrementing a second counter by 1.

As one embodiment, the behavior of executing radio link monitoring comprises: when the first timer is running, receiving another indication from the physical layer, and in response to receiving the another indication, incrementing the second counter by 1.

As one embodiment, the behavior of executing radio link monitoring comprises: receiving one indication from the physical layer, and in response to receiving the one indication, resetting the second counter.

As one embodiment, the one indication is an "out-of-sync" indication, the another indication is an "in-sync" indication, the first counter is N310, the second counter is N311, a first value is the N310, a second value is the N311, and the first timer is T310.

As one embodiment, the one indication is a beam failure instance indication, and the first counter is BFI_COUNTER.

As one embodiment, the behavior of executing radio link monitoring comprises: when the first counter reaches the first value, starting the first timer.

As one embodiment, the behavior of executing radio link monitoring comprises: when the second counter reaches the second value, stopping the first timer.

As one embodiment, the behavior of executing radio link monitoring comprises: when the first counter reaches the first value, triggering one piece of BFR.

As one embodiment, the behavior of monitoring a radio link problem means that: the first timer expires.

As one embodiment, the behavior of monitoring a radio link problem means that: the first counter reaches the first value.

As one embodiment, the radio link monitoring is executed according to an RS resource indicated by one BFD-RS indication MAC CE.

As one embodiment, the radio link monitoring is executed according to an RS resource in one RadioLinkMonitoringConfig IE for the second cell.

As one embodiment, the radio link monitoring is executed according to an RS resource in one BeamFailureDetection for the second cell.

As one embodiment, the radio link monitoring is executed according to an RS resource in one BeamFailureDetectionSet for the second cell.

As one embodiment, the radio link monitoring is executed according to an RS resource in one RadioLinkMonitoringRS IE for the second cell.

As one embodiment, the radio link monitoring is executed according to an RS resource in one failureDetectionResourcesToAddModList field for the second cell.

As one embodiment, the behavior of executing radio link monitoring on the second cell depends on whether a spatial filter of an RS resource associated with a third cell identifier is applied to wireless transmission.

As one sub-embodiment of the above embodiment, the behavior of executing radio link monitoring on the second cell depends on whether a spatial filter for an RS resource associated with the third cell identifier is applied to the wireless transmission.

As one sub-embodiment of the above embodiment, the spatial filter of the RS resource associated with the third cell identifier is not applied to the wireless transmission, and the radio link monitoring is executed on the second cell.

As one dependent embodiment of the above sub-embodiment, as long as the spatial filter of the RS resource associated with the third cell identifier is applied to the wireless transmission, the radio link monitoring is not executed on the second cell.

As one dependent embodiment of the above sub-embodiment, as long as the spatial filter of the RS resource associated with the third cell identifier is applied to the wireless transmission, the radio link monitoring is not executed on the second cell, and the radio link monitoring is executed on a third cell.

As one dependent embodiment of the above sub-embodiment, as long as the spatial filter of the RS resource associated with the third cell identifier is applied to the wireless transmission, the radio link monitoring is not executed on the second cell, and the radio link monitoring is not executed on the third cell.

As one sub-embodiment of the above embodiment, in response to the behavior of monitoring the radio link problem on the second cell, the radio link failure is determined.

As one sub-embodiment of the above embodiment, the behavior of determining the radio link failure depends on a spatial filter of an RS resource of a first cell being applied to the wireless transmission, and a spatial filter of any RS resource associated with the third cell identifier is not applied to the wireless transmission.

As one dependent embodiment of the above sub-embodiment, when the spatial filter of the RS resource associated with the third cell identifier is applied to the wireless transmission, the radio link monitoring is executed on the second cell.

As one dependent embodiment of the above sub-embodiment, the radio link failure is considered to occur only when the spatial filter of any RS resource associated with the third cell identifier is not applied to the wireless transmission.

As one dependent embodiment of the above sub-embodiment, as long as the spatial filter of the RS resource associated with the third cell identifier is applied to the wireless transmission, and the spatial filter of any RS resource of the first cell is not applied to the wireless transmission, the radio link failure is not considered to occur.

As one embodiment, the behavior of determining the radio link failure depends on the spatial filter of the RS resource of the first cell being applied to the wireless transmission and the spatial filter of any RS resource associated with the third cell identifier not being applied to the wireless transmission.

As one sub-embodiment of the above embodiment, the radio link monitoring is executed on the second cell only when the spatial filter of the RS resource associated with the third cell identifier is not applied to the wireless transmission.

As one sub-embodiment of the above embodiment, as long as the spatial filter of the RS resource associated with the third cell identifier is applied to the wireless transmission, the radio link monitoring is not executed on the second cell.

As one sub-embodiment of the above embodiment, as long as the spatial filter of the RS resource associated with the third cell identifier is applied to the wireless transmission, the radio link monitoring is not executed on the second cell, and the radio link monitoring is executed on the third cell.

As one sub-embodiment of the above embodiment, as long as the spatial filter of the RS resource associated with the third cell identifier is applied to the wireless transmission, the radio link monitoring is not executed on the second cell, and the radio link monitoring is not executed on the third cell.

As one sub-embodiment of the above embodiment, when the spatial filter of the RS resource associated with the third cell identifier is applied to the wireless transmission, the radio link monitoring is executed on the second cell.

As one sub-embodiment of the above embodiment, the radio link failure is considered to occur only when the spatial filter of any RS resource associated with the third cell identifier is not applied to the wireless transmission.

As one sub-embodiment of the above embodiment, as long as the spatial filter of the RS resource associated with the third cell identifier is applied to the wireless transmission, and the spatial filter of any RS resource of the first cell is not applied to the wireless transmission, the radio link failure is not considered to occur.

As one embodiment, the RS resource of the first cell belongs to an RS resource indicated by one RadioLink Monitoring Config IE.

As one embodiment, the RS resource of the first cell comprises an RS resource indicated by at least one RadioLinkMonitoringRS.

As one embodiment, the RS resource of the first cell is an RS resource indicated by one RadioLinkMonitoringRS.

As one embodiment, the RS resource associated with the third cell identifier belongs to an RS resource indicated by one RadioLink Monitoring Config IE.

As one embodiment, the RS resource associated with the third cell identifier comprises an RS resource indicated by at least one RadioLinkMonitoringRS.

As one embodiment, the RS resource associated with the third cell identifier is an RS resource indicated by one RadioLinkMonitoringRS.

### Embodiment 10

Embodiment 10 illustrates a schematic diagram of an artificial intelligence processing system according to one embodiment of the present application, as shown in FIG. 10. FIG. 10 comprises a first module, a second module, a third module, and a fourth module.

In Embodiment 10, the first module sends a first data set to the second module, the second module generates a target first-type parameter group according to the first data set, the second module sends the generated target first-type parameter group to the third module, and the third module processes a second data set using the target first-type parameter group to obtain a first-type output and then sends the first-type output to the fourth module.

As one embodiment, the first module, the second module, the third module, and the fourth module all belong to a first node.

The above method avoids air interface signaling interaction and shortens transmission delay.

As one embodiment, any one of the first module, the second module, the third module, and the fourth module does not belong to the first node.

The above method reduces hardware complexity of the first node.

As one embodiment, at least the first module of the first module, the second module, the third module and the fourth module belongs to the first node; and at least one of the first module, the second module, the third module, and the fourth module does not belong to the first node.

The above method balances the hardware complexity and the transmission delay of the first node.

As one embodiment, the first module is used for data collection.

As one embodiment, the first module generates at least one of the first data set or the second data set according to at least measurement of the first node.

As one embodiment, the first module generates at least one of the first data set or the second data set according to at least measurement for an RS resource associated with a third cell identifier.

As one embodiment, the first module generates at least one of the first data set or the second data set according to at least measurement for a first cell and the measurement for the RS resource associated with the third cell identifier.

As one embodiment, the first module receives a measurement result from at least one piece of UE; and the first module belongs to a second node, or the first module belongs to OAM to which the second node belongs.

As one embodiment, the first module receives the measurement result from at least one piece of UE; and the first module belongs to a third node, or the first module belongs to OAM to which the third node belongs.

As one embodiment, the first module receives a measurement result from at least one network entity; and the first module belongs to the second node, or the first module belongs to the OAM to which the second node belongs.

As one embodiment, the first module receives the measurement result from at least one network entity; and the first module belongs to the third node, or the first module belongs to the OAM to which the third node belongs.

As one embodiment, the first module sends a measurement result of the first node; and the first module belongs to the first node.

As one embodiment, at least one of the first data set or the second data set is transmitted through a Uu interface.

As one embodiment, at least one of the first data set or the second data set is transmitted through an inter-module interface.

As one embodiment, at least one of the first data set or the second data set comprises a measurement result for the first cell.

As one embodiment, at least one of the first data set or the second data set comprises a measurement result for an RS resource associated with the third cell identifier.

As one embodiment, at least one of the first data set or the second data set comprises the measurement result for the first cell and the measurement result for the RS resource associated with the third cell identifier.

As one embodiment, at least one of the first data set or the second data set comprises a movement direction.

As one embodiment, at least one of the first data set or the second data set comprises a movement speed.

As one embodiment, at least one of the first data set or the second data set comprises a movement distance.

As one embodiment, at least one of the first data set or the second data set comprises a measurement result of a current serving cell of the first node.

As one embodiment, at least one of the first data set or the second data set comprises a measurement result of a neighboring cell of the current serving cell of the first node.

As one embodiment, the second module is used for model training.

As one embodiment, the first data set is training data, the second data set is inference data, the second module is used for training a model, and the trained model is described by the target first-type parameter group.

As one embodiment, the third module is used for model inference.

As one embodiment, the third module constructs a model according to the target first-type parameter group, then inputs the second data set into the constructed model to obtain the first-type output, and then sends the first-type output to the fourth module.

As one embodiment, the third module calculates an error between the first-type output and actual data to determine performance of the trained model; and the actual data is data that is received after the second data set and that is transferred from the first module.

The above embodiment is particularly suitable for prediction-related reporting.

As one embodiment, the third module sends first-type feedback to the second module, and the first-type feedback is used for triggering recalculation or update of the target first-type parameter group.

As one embodiment, the third module recovers a reference data set according to the first-type output, and an error between the reference data set and the second data set is used for generating the first-type feedback.

As one embodiment, the first-type feedback is used for reflecting performance of the trained model; and when the performance of the trained model cannot meet requirements, the second module recalculates the target first-type parameter group.

As one sub-embodiment of the above embodiment, the third module comprises a first reference decoder of the present application, and the first reference decoder is described by the target first-type parameter group. An input of the first reference decoder comprises the first-type output, and an output of the first reference decoder comprises the reference data set.

Typically, when the error is too large or has not been updated for too long, the performance of the trained model is considered to be unable to meet the requirements.

As one embodiment, the fourth module is one Actor.

As one embodiment, the fourth module receives the first-type output from the third module.

As one embodiment, the fourth module executes corresponding actions according to the first-type output.

As one embodiment, the fourth module sends second-type feedback to the first module, the second-type feedback is used for generating the first data set or the second data set, or the second-type feedback is used for triggering sending of the first data set or the second data set.

As one embodiment, the fourth module sends the second-type feedback to the first module, and the second-type feedback is used for triggering execution of the first-type output; and the second-type feedback comprises a first signal.

As one embodiment, the behavior of executing the first-type output comprises the behavior of determining the first cell.

As one embodiment, the behavior of executing the first-type output comprises the behavior of applying configuration information of the first cell to wireless transmission.

As one embodiment, the first-type output comprises a first message.

As one embodiment, the first-type output comprises at least one threshold.

As one embodiment, the first-type output comprises a threshold corresponding to each cell.

As one embodiment, the first-type output comprises a first list.

As one embodiment, the first-type output comprises the configuration information of the first cell.

As one embodiment, the first-type output comprises a first cell identifier.

As one embodiment, Embodiment 10 is only for illustrating that the present application can be used for the artificial intelligence processing system. This embodiment does not limit the application of the present application to a non-artificial intelligence processing system, and this embodiment does not limit the application of the present application to other types of artificial intelligence processing systems to achieve effects equivalent to the artificial intelligence processing system shown in FIG. 10.

### Embodiment 11

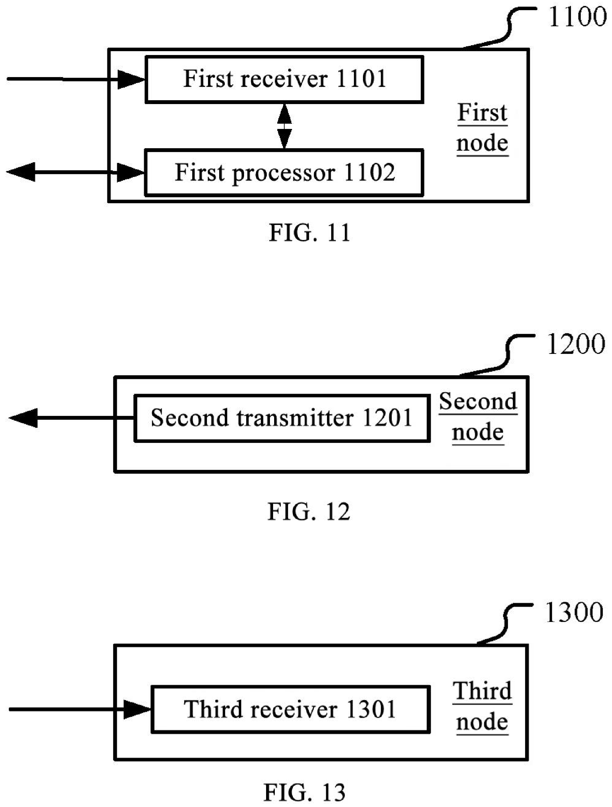

Embodiment 11 illustrates a structural block diagram of a processing device used in a first node according to one embodiment of the present application, as shown in FIG. 11. In FIG. 11, a processing device 1100 in the first node comprises a first receiver 1101 and a first processor 1102.

The first receiver 1101 receives a first message, and the first message comprises configuration information for each cell among at least one cell;
the first processor 1102 determines a first cell, and the first cell is one cell among the at least one cell; and configuration information of the first cell is applied.

In Embodiment 11, determination of the first cell depends on at least a third cell identifier; the third cell identifier is different from an identifier of the first cell; configuration information of a second cell comprises the third cell identifier; and before the configuration information of the first cell is applied, the configuration information of the second cell is applied, and a spatial filter of at least one RS resource associated with the third cell identifier is applied to wireless transmission.

As one embodiment, the first receiver 1101 receives a third threshold, wherein the phrase "determination of the first cell depends on a third cell identifier" means that: the determination of the first cell depends on a measurement result for an RS resource associated with the third cell identifier being not better than or worse than the third threshold.

As one embodiment, the first receiver 1101 receives a first threshold, and the first threshold is for the first cell, wherein the first threshold and the third threshold are configured for a same triggering event; and whether the first threshold is valid depends on whether a spatial filter of an RS resource associated with the third cell identifier is applied to the wireless transmission.

As one embodiment, "determination of the first cell depends on a third cell identifier" means that: the determination of the first cell depends on a measurement result for the first cell being better than or not worse than the measurement result for the RS resource associated with the third cell identifier.

As one embodiment, the first processor 1102 executes radio link monitoring on the second cell, wherein the behavior of executing radio link monitoring on the second cell depends on whether the spatial filter of the RS resource associated with the third cell identifier is applied to the wireless transmission.

As one embodiment, the first processor 1102 executes the radio link monitoring on the second cell and determines a radio link failure, wherein the behavior of determining the radio link failure depends on a spatial filter of an RS resource of the first cell being applied to the wireless transmission and a spatial filter of any RS resource associated with the third cell identifier not being applied to the wireless transmission.

As one embodiment, the configuration information of the second cell comprises a first list, the first list comprises at least one cell identifier, and the third cell identifier is one cell identifier among the at least one cell identifier; and the determination of the first cell depends on a position of the third cell identifier in the first list.

As one embodiment, the first processor 1102 sends a first signal on the first cell, wherein the first signal indicates that the configuration information of the first cell is applied.

As one embodiment, the first processor 1102 comprises a first transmitter.

As one embodiment, the first processor 1102 comprises one receiver and the first transmitter.

As one embodiment, the receiver in the first processor 1102 is the first receiver 1101.

As one embodiment, the receiver in the first processor 1102 is not the first receiver 1101.

As one embodiment, the first receiver 1101 comprises at least one of an antenna 452 or a receiving device 454 or a multi-antenna receiving processor 458 or a receiving processor 456 or a controller/processor 459 or a memory 460 or a data source 467 in FIG. 4 of the present application.

As one embodiment, the first receiver 1101 comprises at least the antenna 452 and the receiving device 454 in FIG. 4 of the present application.

As one embodiment, the first transmitter comprises at least one of the antenna 452 or a transmitting device 454 or a multi-antenna transmitting processor 457 or a transmitting processor 468 or the controller/processor 459 or the memory 460 or the data source 467 in FIG. 4 of the present application.

As one embodiment, the first transmitter comprises at least the antenna 452 and the transmitting device 454 in FIG. 4 of the present application.

### Embodiment 12

Embodiment 12 illustrates a structural block diagram of a processing device used in a second node according to one embodiment of the present application, as shown in FIG. 12. In FIG. 12, a processing device 1200 in the second node comprises a second transmitter 1201.

The second transmitter 1201 sends a first message, and the first message comprises configuration information for each cell among at least one cell.

In Embodiment 12, a recipient of the first message determines a first cell, and the first cell is one cell among the at least one cell; the recipient of the first message applies configuration information of the first cell; determination of the first cell depends on at least a third cell identifier; the third cell identifier is different from an identifier of the first cell; configuration information of a second cell comprises the third cell identifier; and before the configuration information of the first cell is applied, the configuration information of the second cell is applied, and a spatial filter of at least one RS resource associated with the third cell identifier is applied to wireless transmission.

As one embodiment, the second transmitter 1201 sends a third threshold, wherein the phrase "determination of the first cell depends on a third cell identifier" means that: the determination of the first cell depends on a measurement result for an RS resource associated with the third cell identifier being not better than or worse than the third threshold.

As one embodiment, the second transmitter 1201 sends a first threshold, and the first threshold is for the first cell, wherein the first threshold and the third threshold are configured for a same triggering event; and whether the first threshold is valid depends on whether a spatial filter of an RS resource associated with the third cell identifier is applied to the wireless transmission.

As one embodiment, the recipient of the first message executes radio link monitoring on the second cell; and the behavior of executing radio link monitoring on the second cell depends on whether the spatial filter of the RS resource associated with the third cell identifier is applied to the wireless transmission.

As one embodiment, the recipient of the first message executes radio link monitoring on the second cell; in response to monitoring a radio link problem on the second cell, the recipient of the first message determines a radio link failure; and the behavior of determining the radio link failure depends on a spatial filter of an RS resource of the first cell being applied to the wireless transmission and a spatial filter of any RS resource associated with the third cell identifier not being applied to the wireless transmission.

As one embodiment, the configuration information of the second cell comprises a first list, the first list comprises at least one cell identifier, and the third cell identifier is one cell identifier among the at least one cell identifier; and the determination of the first cell depends on a position of the third cell identifier in the first list.

As one embodiment, the recipient of the first message sends a first signal on the first cell; and the first signal indicates that the configuration information of the first cell is applied.

As one embodiment, the second transmitter 1201 comprises at least one of an antenna 420 or a transmitting device 418 or a multi-antenna transmitting processor 471 or a transmitting processor 416 or a controller/processor 475 or a memory 476 in FIG. 4 of the present application.

As one embodiment, the second transmitter 1201 comprises at least the antenna 420 and the transmitting device 418 in FIG. 4 of the present application.

As one embodiment, the second receiver 1202 comprises at least one of the antenna 420 or a receiving device 418 or a multi-antenna receiving processor 472 or a receiving processor 470 or the controller/processor 475 or the memory 476 in FIG. 4 of the present application.

As one embodiment, the second receiver 1202 comprises at least the antenna 420 and the receiving device 418 in FIG. 4 of the present application.

### Embodiment 13

Embodiment 13 illustrates a structural block diagram of a processing device used in a third node according to one embodiment of the present application, as shown in FIG. 13. In FIG. 13, a processing device 1300 in the third node comprises a third receiver 1301.

The third receiver 1301 receives a first signal on a first cell.

In Embodiment 13, a sender of the first signal receives a first message, and the first message comprises configuration information for each cell among at least one cell; the sender of the first signal determines the first cell, and the first cell is one cell among the at least one cell; the sender of the first signal applies configuration information of the first cell; determination of the first cell depends on at least a third cell identifier; the third cell identifier is different from an identifier of the first cell; configuration information of a second cell comprises the third cell identifier; before the configuration information of the first cell is applied, the configuration information of the second cell is applied, and a spatial filter of at least one RS resource associated with the third cell identifier is applied to wireless transmission; and the first signal indicates that the configuration information of the first cell is applied.

As one embodiment, the sender of the first signal receives a third threshold; and the phrase "determination of the first cell depends on a third cell identifier" means that: the determination of the first cell depends on a measurement result for an RS resource associated with the third cell identifier being not better than or worse than the third threshold.

As one embodiment, the sender of the first signal receives a first threshold, and the first threshold is for the first cell; the first threshold and the third threshold are configured for a same triggering event; and whether the first threshold is valid depends on whether a spatial filter of an RS resource associated with the third cell identifier is applied to the wireless transmission.

As one embodiment, the phrase "determination of the first cell depends on a third cell identifier" means that: the determination of the first cell depends on a measurement result for the first cell being better than or not worse than the measurement result for the RS resource associated with the third cell identifier.

As one embodiment, the sender of the first signal executes radio link monitoring on the second cell; and the behavior of executing radio link monitoring on the second cell depends on whether the spatial filter of the RS resource associated with the third cell identifier is applied to the wireless transmission.

As one embodiment, the sender of the first signal receives executing radio link monitoring on the second cell; in response to monitoring a radio link problem on the second cell, the sender of the first signal determines a radio link failure; and the behavior of determining the radio link failure depends on a spatial filter of an RS resource of the first cell being applied to the wireless transmission and a spatial filter of any RS resource associated with the third cell identifier not being applied to the wireless transmission.

As one embodiment, the configuration information of the second cell comprises a first list, the first list comprises at least one cell identifier, and the third cell identifier is one cell identifier among the at least one cell identifier; and the determination of the first cell depends on a position of the third cell identifier in the first list.

As one embodiment, the third receiver 1301 comprises at least one of an antenna 420 or a receiving device 418 or a multi-antenna receiving processor 472 or a receiving processor 470 or a controller/processor 475 or a memory 476 in FIG. 4 of the present application.

As one embodiment, the third receiver 1301 comprises at least the antenna 420 and the receiving device 418 in FIG. 4 of the present application.

### Embodiment 14

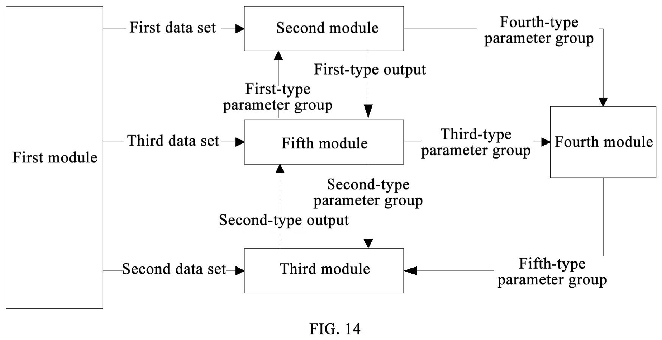

Embodiment 14 illustrates a schematic diagram of an artificial intelligence processing system according to another embodiment of the present application, as shown in FIG. 14. FIG. 14 comprises a first module, a second module, a third module, a fourth module, and a fifth module.

In Embodiment 14, the first module sends a first data set to the second module, the first module sends a second data set to the third module, the first module sends a third data set to the fifth module, the fifth module sends a first-type parameter group to the second module, the fifth module sends a second-type parameter group to the third module, the fifth module sends a third-type parameter group to the fourth module, the second module sends a fourth-type parameter group to the fourth module, and the fourth module sends a fifth-type parameter group to the third module.

As one embodiment, the first module, the second module, the third module, the fourth module, and the fifth module all belong to a first node.

The above method avoids air interface signaling interaction and shortens transmission delay.

As one embodiment, any one of the first module, the second module, the third module, the fourth module, and the fifth module does not belong to the first node.

The above method reduces hardware complexity of the first node.

As one embodiment, at least the first module among the first module, the second module, the third module, the fourth module, and the fifth module belongs to the first node; and at least one of the first module, the second module, the third module, the fourth module, and the fifth module does not belong to the first node.

The above method balances hardware complexity and transmission delay of the first node.

As one embodiment, the first module is used for data collection.

As one embodiment, the first module is responsible for data collection.

As one embodiment, the first module has a data collection function.

As one embodiment, the second module is used for model training.

As one embodiment, the second module is responsible for model training.

As one embodiment, the second module has a model training function.

As one embodiment, the second module executes AI/ML model training.

As one embodiment, the second module executes validation.

As one embodiment, the second module executes testing.

As one embodiment, the second module generates model performance metrics.

As one embodiment, the second module is responsible for data preparation.

As one embodiment, the data preparation comprises at least one of data pre-processing or cleaning or formatting or transformation.

As one embodiment, the third module is used for inference.

As one embodiment, the third module has an inference function.

As one embodiment, the third module is responsible for inference.

As one embodiment, the fourth module is used for model storage.

As one embodiment, the fourth module has a model storage function.

As one embodiment, the fourth module is responsible for storing a trained model.

As one embodiment, the fourth module is responsible for storing a trained model that can be used for executing inference processing.

As one embodiment, the fifth module is used for management.

As one embodiment, the fifth module is responsible for management.

As one embodiment, the fifth module has a management function.

As one embodiment, the first data set is training data.

As one embodiment, the second data set is inference data.

As one embodiment, the third data set is monitoring data.

As one embodiment, the first-type parameter group comprises a monitoring output.

As one embodiment, the second-type parameter group comprises a management instruction.

As one embodiment, the second-type parameter group is used for a fine-tune operation of an inference function.

As one embodiment, the second-type parameter group comprises an identifier of a model.

As one embodiment, the second-type parameter group is used for selecting a model.

As one embodiment, the second-type parameter group is used for switching a model.

As one embodiment, the second-type parameter group is used for activating/deactivating a model.

As one embodiment, the second-type parameter group is used for falling back from an AI-ML operation to a non-AI-ML operation.

As one embodiment, the third-type parameter group comprises a model transfer request.

As one embodiment, the third-type parameter group comprises a model delivery request.

As one embodiment, the fourth-type parameter group comprises a trained model.

As one embodiment, the fourth-type parameter group comprises an updated model.

As one embodiment, the fourth-type parameter group indicates an identifier of a model.

As one embodiment, the fifth-type parameter group comprises model transfer.

As one embodiment, the fifth-type parameter group comprises model delivery.

As one embodiment, the fifth-type parameter group indicates an identifier of a model.

As one embodiment, a first-type output comprises a monitoring output.

As one embodiment, the first-type output exists.

As one embodiment, the first-type output does not exist.

As one embodiment, a second-type output comprises an inference output.

As one embodiment, the second-type output is used by the fifth module for monitoring performance of an AI/ML model.

As one embodiment, the second-type output is used by the fifth module for monitoring performance of an AI/ML function.

As one embodiment, the second-type output exists.

As one embodiment, the second-type output does not exist.

As one embodiment, the artificial intelligence processing system generates or assists in generating at least part of a first message.

As one embodiment, the fifth module generates or assists in generating at least part of the first message.

As one embodiment, the third module generates or assists in generating at least part of the first message.

As one embodiment, the second-type output comprises at least part of the first message.

As one embodiment, the artificial intelligence processing system generates or assists in generating at least one of a first threshold and a third threshold.

As one embodiment, the fifth module generates or assists in generating at least one of the first threshold and the third threshold.

As one embodiment, the third module generates or assists in generating at least one of the first threshold and the third threshold.

As one embodiment, the second-type output comprises at least one of the first threshold and the third threshold.

As one embodiment, the artificial intelligence processing system generates or assists in generating a first list.

As one embodiment, the fifth module generates or assists in generating the first list.

As one embodiment, the third module generates or assists in generating the first list.

As one embodiment, the second-type output comprises the list.

As one embodiment, the artificial intelligence processing system generates or assists in generating a first signal.

As one embodiment, the fifth module generates or assists in generating the first signal.

As one embodiment, the third module generates or assists in generating the first signal.

As one embodiment, the second-type output comprises the first signal.

As one embodiment, the first data set comprises a measurement result of measurement for an RS resource associated with a third cell identifier.

As one embodiment, the second data set comprises the measurement result of the measurement for the RS resource associated with the third cell identifier.

As one embodiment, the third data set comprises the measurement result of the measurement for the RS resource associated with the third cell identifier.

As one embodiment, the first data set comprises a measurement result of the measurement for a first cell and the measurement for the RS resource associated with the third cell identifier.

As one embodiment, the second data set comprises the measurement result of the measurement for the first cell and the measurement for the RS resource associated with the third cell identifier.

As one embodiment, the third data set comprises the measurement result of the measurement for the first cell and the measurement for the RS resource associated with the third cell identifier.

As one embodiment, the phrase "determination of the first cell depends on the third cell identifier" means that: an input of the artificial intelligence processing system depends on the measurement for the first cell and the measurement for the RS resource associated with the third cell identifier, and the determination of the first cell is an output of the artificial intelligence processing system.

As one embodiment, the phrase "determination of the first cell depends on the third cell identifier" means that: the input of the artificial intelligence processing system depends on the measurement for the RS resource associated with the third cell identifier, and the determination of the first cell is the output of the artificial intelligence processing system.

As one embodiment, Embodiment 14 is only for illustrating that the present application can be used for the artificial intelligence processing system. This embodiment does not limit the application of the present application to a non-artificial intelligence processing system, and this embodiment does not limit the application of the present application to other types of artificial intelligence processing systems to achieve effects equivalent to the artificial intelligence processing system shown in FIG. 14.

Those of ordinary skill in the art may understand that all or part of the steps in the above method can be completed by instructing relevant hardware through a program, and the program can be stored in a computer-readable storage medium, such as a read-only memory, a hard disk, or an optical disk. Optionally, all or part of the steps in the above embodiments may also be implemented using one or more integrated circuits. Accordingly, each module unit in the above embodiments may be implemented in the form of hardware or in the form of a software function module. The present application is not limited to any specific form of software and hardware combination. The user equipment, terminal and UE in the present application include but are not limited to drones, communication modules on drones, remote-controlled airplanes, aircrafts, small airplanes, mobile phones, tablets, notebooks, vehicle-mounted communication devices, wireless sensors, network cards, IoT terminals, RFID terminals, NB-IOT terminals, MTC (Machine Type Communication) terminals, eMTC (enhanced MTC) terminals, data cards, network cards, vehicle-mounted communication devices, low-cost mobile phones, low-cost tablets, and other wireless communication devices. The base station or system device in the present application includes but is not limited to macro cellular base stations, micro cellular base stations, Femtocells, relay base stations, gNBs (NR Nodes B), TRPs (Transmitter Receiver Points), and other wireless communication devices.

The above are only preferred embodiments of the present application and are not intended to limit the scope of protection of the present application. Any modifications, equivalent substitutions, improvements and the like made within the spirit and principles of the present application shall be comprised within the scope of protection of the present application.

## Claims

1. A first node used for wireless communication, comprising:
a first receiver receiving a first message, the first message comprising configuration information of each cell among at least one cell;
a first processor determining a first cell, the first cell being one cell among the at least one cell; and applying the configuration information of the first cell,
wherein determination of the first cell depends on at least a third cell identifier; the third cell identifier is different from an identifier of the first cell; configuration information of a second cell comprises the third cell identifier; and before the configuration information of the first cell is applied, the configuration information of the second cell is applied, and a spatial filter of at least one RS resource associated with the third cell identifier is applied to wireless transmission.

2. The first node according to claim 1, comprising:
the first processor receiving a third threshold,
wherein the phrase "determination of the first cell depends on a third cell identifier" means that: the determination of the first cell depends on a measurement result for the RS resource associated with the third cell identifier being not better than or worse than the third threshold.

3. The first node according to claim 2, comprising:
the first processor receiving a first threshold, the first threshold being for the first cell,
wherein the first threshold and the third threshold are configured for a same triggering event; and whether the first threshold is valid depends on whether the spatial filter of the RS resource associated with the third cell identifier is applied to the wireless transmission.

4. The first node according to claim 1, wherein the phrase "determination of the first cell depends on a third cell identifier" means that: the determination of the first cell depends on a measurement result for the first cell being better than or not worse than a measurement result for the RS resource associated with the third cell identifier.

5. The first node according to any one of claims 1 to 4, comprising:
the first processor executing radio link monitoring on the second cell,
wherein the behavior of executing radio link monitoring on the second cell depends on whether the spatial filter of the RS resource associated with the third cell identifier is applied to the wireless transmission.

6. The first node according to any one of claims 1 to 4, comprising:
the first processor executing radio link monitoring on the second cell; and in response to monitoring a radio link problem on the second cell, determining a radio link failure,
wherein the behavior of determining a radio link failure depends on a spatial filter of an RS resource of the first cell being applied to the wireless transmission and the spatial filter of any RS resource associated with the third cell identifier not being applied to the wireless transmission.

7. The first node according to any one of claims 1 to 6, wherein the configuration information of the second cell comprises a first list, the first list comprises at least one cell identifier, and the third cell identifier is one cell identifier among the at least one cell identifier; and the determination of the first cell depends on a position of the third cell identifier in the first list.

8. The first node according to any one of claims 1 to 7, comprising:
the first processor sending a first signal on the first cell,
wherein the first signal indicates that the configuration information of the first cell is applied.

9. A method for a first node used for wireless communication, comprising:
receiving a first message, the first message comprising configuration information of each cell among at least one cell;
determining a first cell, the first cell being one cell among the at least one cell; and applying the configuration information of the first cell,
wherein determination of the first cell depends on at least a third cell identifier; the third cell identifier is different from an identifier of the first cell; configuration information of a second cell comprises the third cell identifier; and before the configuration information of the first cell is applied, the configuration information of the second cell is applied, and a spatial filter of at least one RS resource associated with the third cell identifier is applied to wireless transmission.

10. A second node used for wireless communication, comprising:
a second transmitter sending a first message, the first message comprising configuration information of each cell among at least one cell,
wherein a recipient of the first message determines a first cell, and the first cell is one cell among the at least one cell; the recipient of the first message applies the configuration information of the first cell; determination of the first cell depends on at least a third cell identifier; the third cell identifier is different from an identifier of the first cell; configuration information of a second cell comprises the third cell identifier; and before the configuration information of the first cell is applied, the configuration information of the second cell is applied, and a spatial filter of at least one RS resource associated with the third cell identifier is applied to wireless transmission.

11. A third node used for wireless communication, comprising:
a third receiver receiving a first signal on a first cell,
wherein a sender of the first signal receives a first message, and the first message comprises configuration information of each cell among at least one cell; the sender of the first signal determines the first cell, and the first cell is one cell among the at least one cell; the sender of the first signal applies the configuration information of the first cell; determination of the first cell depends on at least a third cell identifier; the third cell identifier is different from an identifier of the first cell; configuration information of a second cell comprises the third cell identifier; before the configuration information of the first cell is applied, the configuration information of the second cell is applied, and a spatial filter of at least one RS resource associated with the third cell identifier is applied to wireless transmission; and the first signal indicates that the configuration information of the first cell is applied.
